# EUROPEAN PATENT SPECIFICATION

(11) **EP 4 515 344 B1**
(45) Date of publication and mention of the grant of the patent: **21.01.2026**
(21) Application number: 23722087.6
(22) Date of filing: 28.04.2023
(51) Int. Cl.: G05D 1/00

(54) **INTERACTIVE VEHICLE AUTOMATION SYSTEM**
INTERAKTIVES FAHRZEUGAUTOMATISIERUNGSSYSTEM
SYSTÈME D'AUTOMATISATION DE VÉHICULES INTERACTIFS

(30) Priority: 29.04.2022 US 202263336627 P; 11.11.2022 US 202263424591 P
(43) Date of publication of application: 05.03.2025
(73) Proprietor: KUBOTA CORPORATION, Osaka-shi, Osaka 556-8601 (JP)
(72) Inventor: GATTIS, Joshua, Sanger, Texas 76266 (US); MUNDT, Clint, Prosper, Texas 75078 (US)
(74) Representative: Müller-Boré & Partner Patentanwälte PartG mbB
(86) International application number: PCT/IB2023/054402
(87) International publication number: WO 2023/209647

(56) References cited:
- AU-B2- 2018 364 873
- CA-A1- 2 793 055
- DE-A1- 102020 206 366
- JP-A- 2019 204 544

## Description

### FIELD OF THE DISCLOSURE

The invention relates generally to automated vehicle and machine activities.

### BACKGROUND

Autonomous off-highway machines that do exist within the off-highway or other off-road machinery spaces (e.g., agriculture, turf, construction, and mining) involve a single machine working on a task autonomously or in a semi-autonomous manner with human oversight. In some cases, multiple autonomous machines are working on a single mission, but are constrained to work in a specified zone to prevent direct interaction with other machines within the mission.

Machine automation systems (e.g., vehicle automation systems) use an onboard operations system to drive and manage the machine (e.g., the vehicle). The system may also include onboard sensors to identify potential obstacles and provide feedback for driving and operating the machine.

Machines may share data via traditional cellular communication networks as embodied in products for machine telematics, precision farming and construction machine control. While some embodiments allow synchronized behavior between two machines, at least one of these machines has a human operator on-board.

In addition to bounded operations for multiple machines (e.g., multiple vehicles), some machine combinations (e.g., vehicle combinations) have been designed specifically in collaborative groups (e.g., tandem pairs) for operations and interactions. These machines are only configured for operation with each other and treat unpaired machines as obstacles. These specialized designs can include direct radio communication technology and components to maintain an appropriate data link between the machines. The specific communication messages are built into the group instructions to ensure the machines work together. These communication messages are not compatible for machines that are not built with the same specialized system and programed for compatible applications.

Document AU 2018/364873 A1 describes a loading work assistance system comprising: a loading progress calculating section for calculating the degree of progress made by a loading vehicle in loading a transport vehicle located at a construction site; a determination section for determining whether or not the degree of progress meets or exceeds a progress determination threshold value; and a transport vehicle departure instruction section for instructing the waiting transport vehicle to depart if the degree of progress meets or exceeds the progress determination threshold value.

### SUMMARY

The claimed invention is defined by the features set forth in the appended independent claim. Additional embodiments of the claimed invention are defined by the dependent claims.

Increasing automation for applications (e.g., off-highway or other off-road applications) may require intelligent machines to be aware of the behaviors of other machines working in close proximity and the ability to work together in a collaborative manner. Intelligent machine systems need to understand the capabilities, detailed operations and restrictions for each participating machine in the system to plan and coordinate interactive operations with precision.

Intelligent machines may need to communicate, in real-time, to safely accomplish a larger and more complex task than could be managed by independent machines and operators. Today's automated machine combinations that operate together may not be able to operate in any automated manner with other machines in the fleet. In addition, they may rely on multiple independent communication systems with tailored messaging for each feature of the collaborative operation. These communications and operation controls may not be shared with other fleet participants without requiring significant redesign and modification for the different machine attributes (e.g., vehicle attributes).

The present disclosure provides an automation system to assign and manage multiple independent machines' (e.g., vehicles) tandem and interactive operations. The system may include an application programming interface (API) and protocol that is independent of manufacturer, control systems and components. The API may facilitate communication of machine characteristics having a defined framework for an autonomous machine to communicate its capabilities, capacities, and requirements to other dissimilar entities within the machinery ecosystem. These characteristics may be integrated into a detailed machine profile to allow development of precise mission plans for multiple dissimilar automated machines. The machine profile may further include machine-specific operations and instructions.

Some embodiments provide an automation system to manage multiple independent machines (e.g., vehicles), and their collaborative operation, using a communication system designed to communicate over at least two channels, including both short- and long-range communications, through a shared set of communication components. This may create an initial reduction in components and communication protocol designs and may facilitate significant benefits in deploying a machine fleet wherein multiple machines may operate in a collaborative manner. Each machine in the system may be able to communicate using the same communication channels.

In some embodiments, machine profiles may be used in developing accurate mission plans from a fleet of disparate vehicles with different operating systems. The development of compatible machine profiles providing an accurate reflection of the machines' characteristics allows improved fleet configuration and execution of interactive autonomous operations. The present disclosure teaches a system for expanded machine communication and fleet operations for multi-machine collaboration that is applicable to dissimilar machines. This expansive system overcomes limitations created by the unique nature of purpose-built autonomous machines and the siloed design approach to intra-machine communication.

The present disclosure creates the ability to scale the interfaces of the autonomous machine ecosystem and allows support for a wide variety of applications or machine product lines. This addresses the limitation to multi-machine collaboration that has been specifically built for machines of the same functional model.

Embodiments may provide a communication and control system for a plurality of working machines, which include machines designed for agricultural, mining, construction, turf and logistics projects, among others. The machines may be mobile machines (e.g., off-highway or other off-road mobile machines) that may perform automated collaborative behaviors. The working machines are often vehicular machines, which may be capable of moving from location to location in addition to their working operations.

Embodiments may include a plurality of working machines. Each working machine may include a communication device configured to provide multi-channel communication. The multi-channel communication may include long-range and short-range communication channels. In some embodiments, the communication system may be a vehicle-to-everything (V2X) device, which may provide cellular and direct communication options.

In some embodiments, the communication device may be configured to transmit status information of the working machine and receive a set of machine instructions. These updates and instructions may be sent through the long-range communication channel initially. The working machine may also include a controller to control operation of the working machine. The controller may be a system with a computer to process and drive control actuators throughout the working machine. In addition, the controller may receive feedback regarding operations through various operational sensors, such as onboard perception systems, proximity sensors, location systems, working load sensors and other sensor systems to collect operational information in real-time.

In some embodiments, each working machine may send independent status updates to a remote system and receive machine-specific instructions from the remote system. The remote system may process and dispatch a mission plan to the plurality of working machines, which may include the machine-specific instructions for each participating machine.

In some embodiments, a first working machine may receive the status information from a second working machine via the short-range communication network. The first controller may operate the first working machine based on the specific instructions for the first machine and the second status information. In some embodiments, the second status information may relate to anticipated interactions and guidance information for the interaction. In some embodiments, the second status information may require the first controller to modify the application of machine specific instructions.

In some embodiments, if the working machine is operated in a manner different from one programed by the set of machine instructions, the communication device for the working machine may be configured to transmit an updated set of machine instructions to the remote system over the cellular communication network. In some embodiments, if the working machine is operating in a manner different from behavior instructed in the mission plan, the remote system may observe such variances contained in the machine status information it receives over the cellular network. The remote system may create a new fleet mission plan and redistribute new machine specific instructions for each working machine.

In some embodiments, a second working machine may receive status information from a first working machine via the short-range communication network. The controller of the second working machine may operate the second working machine based on the second machine's set of instructions and the status information from the first working machine. In some embodiments, a first working machine and the second working machine may operate interactively. They may conduct a real-time information exchange of status information from each machine over the short-range communication network. In some embodiments, interactive operations may be managed by the first controller using the first set of machine instructions and the real-time information exchange and the second controller using the second set of machine instructions and the real-time information exchange.

In some embodiments, the controller system may be configured to keep the working machine a distance from a detected obstacle. The controller may further be configured to allow interaction with a second working machine within the distance based on the real-time information exchange. The communication device, in some embodiments, may transmit periodic operational updates to a server over the cellular communication network. The operational updates may include any modifications to the machine's set of machine instructions and the machine's status information. The remote server may evaluate the operational updates and may create an updated second set of machine instructions for another working machine based on the operational updates from a first working machine. The second working machine may receive the updated second set of machine instructions and the second controller may execute the updated second set of machine instructions.

In some embodiments, a working machine may include a communication device configured to provide multi-channel communication and an automated control system that may manage operations of the working machine. The multi-channel communication may include communication over a cellular communication network and a short-range communication network. The communication device may be a V2X communication module in some embodiments. The communication device may be configured to transmit status information of the working machine, receive a mission plan over the cellular communication network and receive collaborative machine information over the short-range communication network from a second working machine. The second working machine may also include a communication device that may be configured to provide multi-channel communication over the cellular communication network and the short-range communication network. In some embodiments, the automated control system may manage an interaction with the second working machine based on the mission plan and the collaborative machine information. In some embodiments, the mission plan may be maintained in a remote server system and machine specific instruction sets may be sent to the working machines.

In some embodiments, the working machine may have an obstacle safety system to keep the working machine a distance from a detected obstacle. The automated control system may manage the operations of the working machine to maintain the distance from the detected obstacle. The automated control system may control the working machine to interact with the second working machine within the distance based on a real-time information exchange with the second working machine over the short-range communication network. In some embodiments, the mission plan may provide instructions for the automated control system to interact with the second working machine, and the automated control system may use the real-time information exchange to manage the interaction.

In some embodiments, the mission plan may instruct the automated control system to interact with a plurality of working machines using real-time information from each of the plurality of working machines. One or more machines may be aligned hierarchically, wherein interactions may be prioritized by the machines without further instruction from the remote system.

In some embodiments, the system may include a plurality of machines working on a defined mission. Each machine may contain intelligent hardware components, such as an application gateway. The intelligent hardware components may also contain or be operably connected to a wireless cellular module capable of both long- and short-range communication. In some embodiments, these communications are referred to as vehicle-to-cellular (V2C) and vehicle-to-everything (V2X) communication methods.

In some embodiments, the machines may primarily operate in non-interactive operations, working within the mission boundaries at safe distances, such as more than 10m, from one another. Under such conditions, the machines may be aware of each other's status through a network data connection over V2C communication with a cloud infrastructure.

In certain circumstances, machines may need to interact and work within close proximity-less than the safe distance-and possibly work in a collaborative manner. During close proximity operations, the machines may establish a real-time communication connection using a short-range communication technology, such as V2X. The short-range communication connection may allow the machines to safely react to each other's behavior and maintain a scripted workflow of collaborative functions without latency, bandwidth, and network availability restrictions involved in traditional network connections.

In order to capture the full value of machine automation, a system may facilitate multiple automated machines operating simultaneously. To increase efficiency and safety of intelligent autonomous machines, the present disclosure teaches a mechanism and system to support real-time communication between machines facilitating close proximity operation and collaborative behaviors.

Some embodiments include a networked ecosystem including a plurality of working machines with automated systems, such as machines designed for agricultural, construction, turf and logistics projects. Embodiments of the networked ecosystem may also include a remote cloud management system and a control system. The remote cloud management system may receive communications from the working machines and the control system. In some embodiments, the remote cloud management system may also receive communications from other sources, such as a machine deployment system.

In some embodiments, the remote cloud management system includes storage to hold and manage activity instructions, machine profile information and mission planning rules and limitations. In some embodiments, the cloud management system includes a collection of selectable mission activities and interactions, which may be applied as part of mission plan instructions when the requisite working machines that may achieve the activity are present. In some embodiments, the collection may be stored in a database format.

In some embodiments, the cloud management system facilitates mission planning development. The cloud management system may receive a mission plan request framing a project for a mission plan to accomplish from a control system. The control system may include a dedicated user interface. In some embodiments, a remote user interface accesses the control system via a wireless network connection, such as a mobile phone application.

In some embodiments, framing the project for a mission plan may include identifying account information, a project location or boundaries, available materials and machines, project goals, project constraints and other information. In some embodiments, the control system may be used to define a mission plan using information from the cloud management system.

In some embodiments, the remote cloud management system may include an automation system that develops mission plans based on machine profiles and mission activities. The automation system may identify a machine fleet to accomplish the project based on constraints and availability of machines. The machine fleet may include dissimilar machines operating with distinct technologies.

In some embodiments, the automation system may use each machine's profile and the mission activity options within the machine's capability to build a common mission plan for the fleet and assign machine specific tasks compatible with each machine's operating technology.

In some embodiments, the working machine sends machine status information and updates for its machine profile via a long-range communication channel, such as cellular communication. The working machine may also receive updates, mission plans and/or mission participant information. Each working machine may send direct communications to additional machines in an assigned fleet. In some embodiments, the mission plan may also include communication protocols for direct communication between dissimilar machines in the fleet. The communication protocols may address distinctions in the operating technologies and system languages.

Embodiments of the API include reconciliation and translation systems, which convert each set of machine information from a native format into a common set of profile characteristics for mission planning. The API also may reconvert the common characteristic definitions into machine specific instructions and information when sending mission plans for execution by the fleet of machines.

In some embodiments, the machine characteristics are compiled during the manufacture of the machine and provided to the cloud management system through the API, which converts the characteristics, if needed, into the common machine profile format for the system. Machine characteristics may include multiple features, component descriptions and attributes of the machine, such as the speed, torque, power take off RPM, hydraulic power, clearance, etc. Machine characteristics may be determined during the installation and implementation of aftermarket automation systems for the machine in some embodiments.

Embodiments may include a training system to determine machine characteristics using a sensor system and defined operational protocols. The training system may be used to create an initial build of the machine profile or to update a machine profile. The training system may use the automation controls and associated sensors to evaluate the machine characteristics. In some embodiments, additional sensors may be used to obtain specific feedback relating to the machine characteristics.

The cloud management system may assign a default machine profile to each machine having the same class, make and model, and selection of feature. The default machine profile may be modified by the manufacturer, dealer or other party based on known modifications. In other embodiments, the machine may conduct a reduced training session to confirm that the machine operations match the default settings or identify machine-specific characteristics.

### A BRIEF DESCRIPTION OF THE DRAWINGS

Embodiments will now be described, by way of example only, with references to the accompanying drawings in which:
FIG. 1 is an embodiment of a system application;
FIG. 2 is an embodiment of a block diagram of interactive machine components;
FIG. 3 is an embodiment of a system operation flowchart;
FIG. 4 is another embodiment of a working machine operation flowchart;
FIG. 5 is another embodiment of a working machine operation flowchart;
FIG. 6 is an embodiment of a system application;
FIG. 7 is an embodiment of a system diagram;
FIG. 8 is an embodiment of an operation flowchart for a current machine profile;
FIG. 9 is an embodiment of a system flowchart for deploying a mission plan;
FIG. 10 is an embodiment of a system flowchart for mission planning;
FIG. 11 is an embodiment of a machine fleet selection flowchart;
FIG. 12 is an embodiment of a mission plan generation flowchart; and
FIG. 13 is another embodiment of a system flowchart for mission planning.

### DETAILED DESCRIPTION

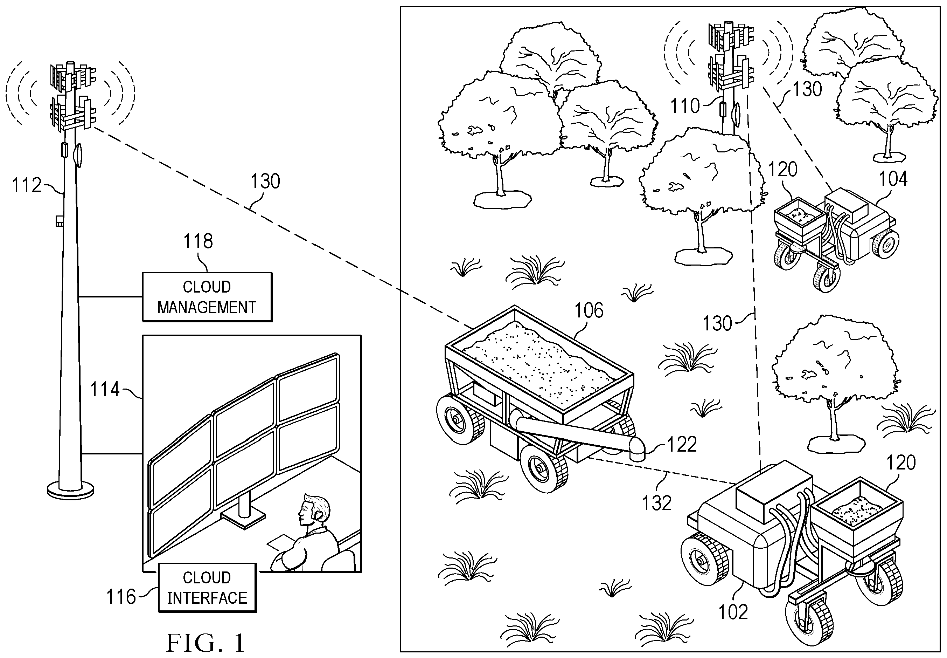

Figure 1 shows a system layout from field machines to a remote system. The field machines in this embodiment include two automated fertilizer applicators 102 and 104 and a tender machine 106. Those skilled in the art will recognize that the applicators 102 and 104 and the tender machine 106 are illustrative examples, and the system is applicable to many working machine combinations. The working machines may be tractors, lawnmowers, agricultural equipment, mining equipment, road construction equipment, terraforming equipment, building machines and other working machines.

The automated applicators 102 and 104 include a fertilizer bin 120, which holds fertilizer prior to dispersion and includes drive systems and a fertilizer distribution system. The tender machine 106 includes a large fertilizer storage bin, a drive system and fertilizer delivery arm 122 to provide fertilizer refills to the automated applicators 102 and 104.

The automated fertilizer applicators 102 and 104 and the tender machine 106 each have a control system to drive multiple actuators and operational controls. These operational controls manage the direction and speed of the applicators 102 and 104 with throttle and steering controls. In addition, the applicators 102 and 104's control system may manage the dispersion rate and distribution pattern for the fertilizer application system. In some embodiments, the control system may be connected to a fertilizer level sensor to determine when the onboard fertilizer level is low. The tender machine 106's control system may control delivery of fertilizer through the delivery arm 122. In some embodiments, the control system may also control actuation of the delivery arm 122 to adjust positioning.

The automated applicators 102 and 104 and the tender machine 106 include communication systems, such as a V2X system with a cellular communication channel 130 and direct communication channel 132. Those skilled in the art will recognize that the communication systems and communication modules are a known class of structures that provide communication capabilities, and include communication chipsets, antennas and other known structures. In addition, alternative communication systems may be employed to the example V2X system, and the communication module may incorporate different combinations of short- and long-range communication capabilities.

As the applicators 102 and 104 conduct fertilizing operations over the field, they each send machine status updates over the cellular communication channel 130 to a nearby cell tower 110 or 112. In some embodiments, the status updates are sent in near real-time. In other embodiments, a periodic update system may require each applicator 102 and 104 to send updates on a set time schedule, such as every 5 or 10 minutes. In some embodiments, the status updates are sent when a trigger condition is encountered. For example, the applicator 102 may encounter a series of unexpected obstacles that it must drive around and then compensate for the fertilization dispersion. When the path or the scheduled progress changes, the applicator 102 control system may provide the status update. In some cases, the changes must exceed a threshold level to trigger an update, such as a 2%, 6% or 10% change. If the applicator 104 is continuing to follow its machine instructions without deviation, applicator 104 may not send a status update. In some embodiments, the applicator 104 may send an indication that it remains on track instead of a status update if the applicator 104 is continuing to follow its machine instructions without deviation. This indication may be a simplified message to limit use of the communication system and network.

In some embodiments, the working machines, applicators 102 and 104, will send updates based both on a periodic schedule and a trigger basis, whereby a triggered update is sent upon encountering the trigger and a periodic update is sent every 2, 5, 15 or 20 minutes. In some embodiments, a periodic update may only be sent if a trigger update has not been sent within the prior period. In such cases, the period may restart every time an update is sent, whether based on a trigger or the periodic update.

The communications are transmitted to a remote cloud management system 118 using the cellular communication channel 130 or another communication option from the cellular tower 110 or 112. For example, the communication received at cellular tower 110 may be sent from the cell tower 110 over the Internet to the cloud management system 118. Those skilled in the art will recognize that alternative communications may be used instead of the cellular communication channel 130 for long range communication, and cell towers 110 and 112 may facilitate alternative communications or additional communications network connections.

The status updates may include position information, coverage of fertilized areas, obstacle information, path adjustments, speed, current operational diagnostics (such as fuel level or battery life), current fertilizer levels and other information. The cloud management system 118 may receive status updates from each of the fertilizer applicators 102 and 104. In some embodiments, if a status update is not received from a fertilizer applicator 102 or 104, the cloud management system 118 will assume the applicator 102 or 104 has maintained its operations of the mission plan and use the expected information from the mission plan for any analysis.

In some embodiments, the cloud management system 118 may send a ping message over the cellular communication channel 130 to determine if the fertilizer applicators 102 and 104 are connected to the cellular network. In addition to pinging the applicators 102 and 104, the cloud management system 118 may request updated information from the applicators 102 and 104 on an ad hoc basis.

Using the updated information, the cloud management system 118 may confirm whether or not the fertilizer applicators 102 and 104 are operating consistent with the current mission plan or had to deviate. If the cloud management system 118 identifies a deviation, the cloud management system 118 may automatically revise the mission plan based on the updated information. For example, if the applicator 104 has operated at a slower pace to address detected obstacles and is behind schedule, the cloud management system 118 may adjust the mission plan to shift more of the field to applicator 102 to compensate for overall timing and efficiency to complete the field fertilization operations.

When the cloud management system 118 revises the mission plan, it may issue new machine operation instructions, which are sent to the fertilizer applicators 102 and 104 over the cellular communication channel 130. The applicators 102 and 104 update their instructions and continue to operate and send updates.

In some embodiments, the status update may include a refill request or the cloud management system 118 may identify sufficiently low fertilizer levels in one or both of the bins 120. In response, the cloud management system 118 may send the tender machine 106 into the field and direct it toward the location or expected location of the first fertilizer applicator to refill. For example, if the fertilizer level in the bin 120 of fertilizer applicator 102 is lowest, the tender machine 106 may be directed to the applicator 102 first. In some embodiments, the refill request may include a time frame or rally time to coordinate the refill interaction.

In some embodiments, the tender machine 106 may receive a mission plan with instructions for tendering interaction with each fertilizer applicator 102 and 104 at pre-planned times and rally locations. In addition, the tender machine 106 may be directed to a preset staging area near the first rally location or adjacent to an active field of operation to ensure proximity for pre-planned or requested actions. The pre-planned activity may correspond to predicted status information for the fertilizer applicator 102 or 104 at the rally time. This predicted status information may be compared with actual status information to evaluate operational consistency with expectations. Based on this comparison, the cloud management system 118 may update mission plans to account for any unexpected results.

In some embodiments, the pre-planned tendering activity may include one or more initiation triggers in addition to the pre-set rally time. If an initiation trigger occurs, the tendering activity may begin prior to the pre-set rally time. Initiation triggers may include entering within a threshold proximity to the tendering machine, a status update indicating the fertilizer load is below a threshold level, a refill request from the cloud management system 118 or the applicator 102 or 104, or any other applicable trigger or combination of triggers. The inclusion of triggers allows for a preprogrammed operation that is only altered when needed based on periodic updates and limits the dependency on a cellular or long-range connection to the cloud management system 118.

As the tender machine 106 approaches the fertilizer applicator 102, the cloud management system 118 may increase communication updates and pass each machine's location, heading and speed information to the other machine. In addition, the applicator 102 and tender machine 106 may send pings over the short-range communication channel 132 to find and initiate direct communication between the machines. Once the tender machine 106 is within the short-range communication range with the applicator 102 and direct communication begins, the machine instructions for collaborative interaction may begin for both machines.

The interaction protocol in the instructions may include entering a near real time communication protocol over the short-range communication channel 132. In some embodiments, the machines 102 and 106 will pause any long-range communications during the interaction. In other embodiments, the machines 102 and 106 may provide more updates to the cloud management system 118. In some embodiments, the interaction protocol instructions will include each machine's controller modifying the obstacle detection operations to allow the machines 102 and 106 to enter close proximity ranges that are not permitted for obstacles.

During the interaction protocol, the machines 102 and 106 communicate necessary information-such as location, heading, speed, load levels and other information-for the tender machine 106 to position the delivery arm 122 above the bin 120. Once the delivery arm 122 is in place, the tender machine 106 will deliver a refill of fertilizer to the bin 120. In some embodiments, the refill may be a predetermined amount from the cloud management system 118 based on prior status updates and the fertilizer amount needed to complete fertilization based on the mission plan. In some embodiments, the tender machine 106 will refill the bin 120 to a set full load level. In some embodiments, the measurement of fertilizer may be conducted by the tender machine 106 to ensure only an identified amount is delivered. The tender machine 106 may also measure the amount delivered and update the cloud management system 118 in order to track inventory, cost and other logistical information. In some embodiments, the fertilizer applicator 102 will measure its load level and send updates to the tender machine 106 over the short-range communication channel 132. The fertilizer applicator 102 may send a full or stop notice when the bin 120 reaches a full load, which may be prior to reaching the top to avoid spillage or overfilling.

In some embodiments, the entire refill process may occur without the fertilizer applicator 102 stopping its fertilizer operations. For example, the tender machine 106 may approach the applicator 102 from behind to avoid interfering with the fertilizer dispersal. The tender machine 106 may modify speed to match the applicator 102 once the delivery arm 122 is properly positioned. The approach and speed adjustments may be determined by the tender machine 106's control system based on the status information received in near real time from the fertilizer applicator 102. As both machines 102 and 106 move collaboratively (e.g., in tandem) with the delivery arm 122 over the bin 120, the tender machine 106 delivers a refill of fertilizer while the applicator 102 continues to distribute fertilizer along the path. During this collaborative operation, the direct short-range communication may facilitate information and obstacle notices from the applicator 102 to be immediately addressed. In addition, the fertilizer applicator 102 may provide notice when a boundary or turn is approaching in order for the tender machine 106 to adjust operation accordingly. For example, the applicator 102 may share an approaching path adjustment and speed changes to move around the obstacle in order for the tender machine 106 to match or stop the refill and follow to another opportune path to continue refilling.

Once the fertilizer applicator 102 is refilled, the tender machine 106 may issue a status update over the cellular communication channel 130 and a request for updated information on the next applicator to refill from the cloud management system 118. The cloud management system 118 provides updated information for applicator 104, and the tender machine 106 heads to the next applicator 104 and pings to initiate the next contact and interaction. In some embodiments, once the fertilizer applicator 104 is refilled, the tender machine 106 may return to a set location, such as a staging area or the next rally point in the mission plan. The tender machine 106 may receive updated mission parameters in some cases, which may alter specifications, timing, location or other parameters of the next activity for the tender machine 106.

In some embodiments, the working machines 102, 104 and 106 regularly use short-range communication to ping for other machines in the area. This may be for identifying interactions and for identifying potential obstacles to coordinate around. When a responsive ping is received from a second machine, the first machine may determine if the second machine is an interactive machine identified in the machine operation instructions or not. If it is an interaction machine, the first machine may further confirm that the time for interaction is appropriate before entering an interaction protocol. If the timing is not appropriate or the second machine is not an interactive machine for the first machine's operations, the second machine may be considered an obstacle and the two machines may communicate over the direct communication channel 132 to coordinate operations to avoid a crash or interfering with either operation.

For example, if the field fleet has multiple fertilizer applicators 102 and 104 and tender machines 106, two fertilizer applicators 102 and 104 may enter the short-range communication protocol. This may be expected if the mission plan has the final fertilizing passes near each other. In such cases, the cloud management system 118 may share obstacle profiles for each machine expected to operate near another machine. The first machine may use these machine-specific obstacle profiles to differentiate between allowed machines and potential obstacles. The machine may compare objects captured by the obstacle perception system to the obstacle profiles to properly flag potential risks. These obstacle profiles may also be shared between machines over the short-range communication standard to further facilitate differentiation between allowed machine proximity and potential obstacles.

If the applicators 102 and 104 enter the same range, they may communicate to confirm that the location, heading and speed will not place them in a crash situation or cause the fertilizer dispersion to overlap in an unacceptable way. As another example, if the tender machine 106 is returning to a fertilizer source and passes by a recently filled applicator 102, both machines may recognize that the other machine is on the interaction list. At the same time, the tender machine 106 may recognize that the timing is not appropriate because it is not carrying sufficient fertilizer to perform refill actions and send a notification that interaction will not occur to the applicator 102. Similarly, the fertilizer applicator 102 may determine a refill is not necessary and send the tender machine 106 a notice to avoid interaction. Both machines will communicate to avoid interfering with each other but will not conduct close proximity interactions.

In some embodiments, the system includes a remote control center 114 with a cloud interface 116. The cloud interface 116 communicates status information for a fleet of working machines or a plurality of such fleets for display or other output at the remote control center 114. The cloud interface 116 may also receive instructions or requests from the remote control center 114, which may be processed by the cloud management system 118.

In some embodiments, the remote control center 114 operates as a hub for multiple fleet projects, including the example field fertilizing fleet project using working machines 102, 104 and 106. In some embodiments, remote control center 114 facilitates large scale monitoring, managing, and configuration of projects, while the cloud management system 118 implements the projects through development of automated mission plans, development of machine-specific instructions and active updating and directing of the fleet actions.

The control center 114 may identify projects to be completed, available machines for the projects, prioritizations between projects and overall timing requirements, as well as other overarching information and requests. The cloud management system 118 may develop the mission plans for each project using the requests and project definitions, along with profiles for each available machine. In some embodiments, the mission scheduling, expectations, and machine deployments may be sent back to the control center 114 for final approval or authorization. The control center 114's operator may instruct reevaluation based on new or altered requirements, set new parameter constraints or manually enter project adjustments to be entered. For example, if the operator wants to limit the use of a machine for unrelated reasons, they may insert time constraints or geographic restraints on that machine for the cloud management system 118 to revise operations around. In some embodiments, the returned information is provided for notification.

In some embodiments, the cloud management system 118 may identify conflicts in requirements and send the conflicts to the control center 114 for review and decisions. For example, if two projects are provided an equal priority rating and require the same available vehicle, the cloud management system 118 may request an operator from the control center 114 to decide which project should proceed first, or provide additional constraints that allow the cloud management system 118 to decide, such as completion deadlines, fuel efficiency, etc.

In some embodiments, the tender machine 106, applicator 102 or applicator 104 may send a notification to the cloud management system 118 regarding a detected issue, such as an unknown perceived obstacle, an equipment error or other issue. The cloud management system 118 may initiate a drone evaluation if a drone is available for the location. In some embodiments, the control center 114 may be required to initiate the drone operation. The drone may be equipped with a perception system including a camera and a V2X communication component, which can facilitate communication with the local machine. Once initiated, the drone conducts real-time communication over the V2X channel with the local machine that reported the issue. The drone may be used to take images or other information related to the identified issue. For example, the drone may take images of the unknown obstacle for further review. In some embodiments, the drone may not include a cellular communication component and instead transfers the images or other perception information to the local machine, which then transmits the information to the cloud management system 118 and the control center 114 over the cellular communication channel 130.

In other embodiments, the drone may be kept in an area with good cellular communication connections or other connections to the Internet. When the cloud management system 118 determines that a machine is having issues or is outside of a cellular communication zone, the drone may be sent to collect information from the machine using the V2X direct communication channel and then return to the drone staging area to transfer the machine's status information over the known good communication link. In some embodiments, one or more drones may be used to form a pass-through network between areas without good cellular communication coverage into areas with good coverage. The drones pass the information over the V2X communication channel until the information reaches a drone or other machine with good network coverage to send the information to the cloud management system 118.

In some embodiments, the system may use multiple communication options for select purposes. For example, the working machines 102, 104 and 106 may receive mission plans over a cellular or other long-range network. During the operation, the working machines 102, 104 and 106 may use an intermediate-range communication option, such as Bluetooth 5, to ping for other machines in the area. The intermediate-range option may allow the fleet of machines working on a project to maintain awareness of each other over a broad area, larger than the capability of the short-range communication standard, even if the long-range communication is unavailable to one or more of the machines in the fleet. This communication option may be a low bandwidth communication standard, which is not suitable for the long-range communication needs or the short-range interactive communication needs. When the working machines 102, 104 and 106 reach a threshold proximity, the intermediate-range communication may transition to a higher bandwidth, short-range communication system to facilitate an interactive action or manage active collision avoidance.

The multi-communication systems may incorporate a single communication module that includes all the communication options. The communication module may comprise a single chip incorporating all the communication operations with associated antenna systems in some embodiments. Alternatively, the communication module may be a board with two or more communication chips and antenna built in to facilitate the communication operations. As another alternative, the communication module may house multiple boards, chips, antenna and other communication system components to facilitate multiple communication options in a single package.

During a project, the working machines 102, 104 and 106 may begin at a staging area or home base with a strong long-range communication signal. In this starting location, the working machines 102, 104 and 106 receive a mission plan or machine specific instructions from the control center 114 over the cellular network.

Once the project begins, the working machines 102, 104 and 106 may follow the mission plan and communicate over an intermediate-range communication system for field communications. The working machines 102, 104 and 106 may use the intermediate communication system to monitor the location and movement of other machines in the fleet. For example, applicator 102 may use intermediate communication to determine distance to tender machine 106 and applicator 102 may track the prior few distance calculations to determine the direction and speed of travel for tender machine 106. This allows limited bandwidth communications to provide awareness to the working machines 102, 104 and 106, and may be expanded across a project fleet.

During the project, the fleet may use a default intermediate-range communication until a trigger initiates an alternative communication. For example, any malfunction in the intermediate-range communication system may trigger the communication module to ping for nearby machines using short-range communication and attempt to report the error over the long-range communication option. As another example, receiving an alternative form of communication, such as long-range or short-range communication, may cause the communication module to respond using the same form of communication. Other triggers may include proximity thresholds, scheduled reports, threshold sensor readings and other triggers that benefit from alternative range or bandwidth communication options. For example, any request for support from a machine or person that is not available using the intermediate-range communications at the project location may be sent via a long-range communication to the control center 114.

For interactive actions, a proximity threshold may be tied to an interactive action protocol in a mission plan that manages a shift to high-bandwidth short-range communication to facilitate the interactive action. Alternatively, safety protocols may be triggered by a proximity threshold, which causes the system to shift to high-bandwidth short-range communication to manage machine operations to avoid collisions.

In some embodiments, the communication systems may work in parallel. For example, a low bandwidth communication system may continually operate to facilitate machine awareness in a fleet. The low bandwidth communication may continue while a high bandwidth communication initiates and runs for more active interactions relying on increased communication capabilities.

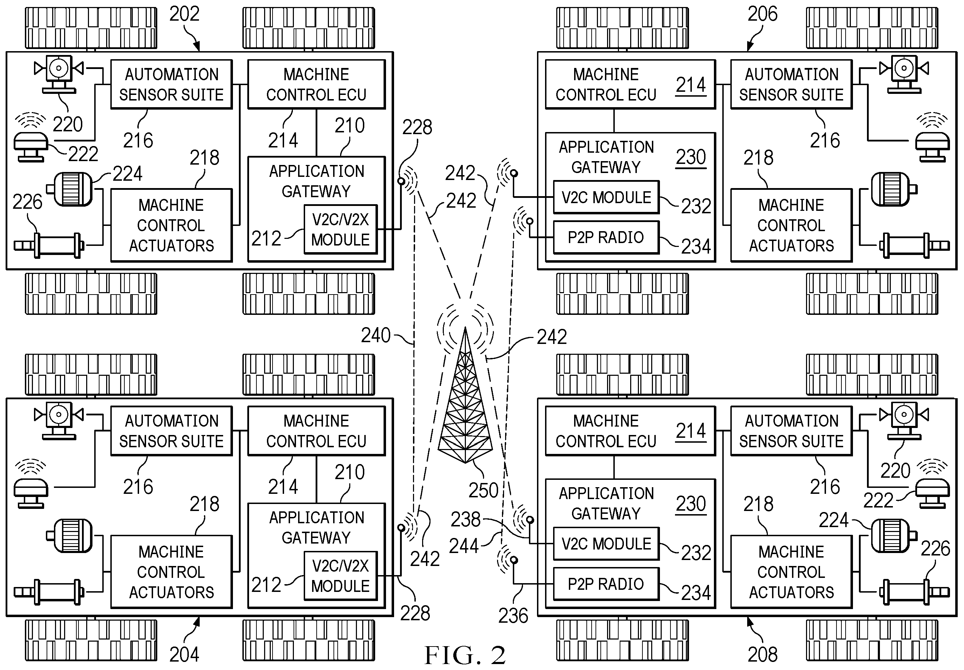

Figure 2 shows a block diagram vehicular interaction system for working machines 202 - 208. Many of the internal components of the working machines 202 - 208 illustrate the same shared elements or example elements. In this embodiment, the working machines 202 and 204 have an application gateway 210 with a communication module 212 and antenna 228 (e.g., a single communication module and antenna). The antenna 228 may include multiple arrays in some embodiments. In some embodiments, the antenna 228 may use one or more different arrays to facilitate alternative communication channels or directionality. The communication module 212 and antenna 228 illustrate the structural communication system discussed with figure 1.

The working machines 206 and 208 in this embodiment have an alternative application gateway 230 with a cellular communication module 232 and attached antenna 238, and a short-range communication radio 234 and antenna 236. The cellular communication module 232, the short-range communication radio 234 and antennas 236 and 238 illustrate another structural communication system.

The application gateways 210 and 230 manage the incoming and outgoing communication through the respective communication systems. The application gateways 210 and 230 are part of a structural computer and bus system to facilitate a security layer to ensure incoming instructions are authorized and directing them to the machine control unit 214 for implementation. The application gateways 210 and 230 provide intelligent hardware components to manage the machine control unit 214.

In some embodiments, the application gateway 210 also routes the outgoing communications from the machine control unit 214 to the appropriate communication channel through the combined communication module 212. For the application gateway 210, the routing may comprise an instruction or message prefix to define the communication path. Once the communication module 212 receives the routing instruction and message, the communication module 212 sends the communication as instructed through the antenna 228 over cellular communication 242 to the cell tower 250 or over the short-range communication 240. In this embodiment, the communication module 212 facilitates communication via vehicle to cellular channels

(242) or vehicle to everything channels (240). The V2C/V2X structure is understood by those skilled in the art.

In some embodiments, the application gateway 230 similarly also routes the outgoing communications from the machine control unit 214 to the appropriate communication channel through either communication module 232 or communication module 234. The application gateway 230 routes the message to the relevant communication module 232 or 234 to ensure the proper communication channel output sends the message. When the communication module 232 receives the message, it sends the communication through the antenna 238 over cellular communication 242 to the cell tower 250. When the communication module 234 receives the message, it sends the communication through the antenna 236 over the short-range peer-to-peer radio communication 244. In some embodiments, the short-range peer-to-peer radio communication 244 may also be compatible with the V2X communication channel 240, which allows the communication systems to cross-reference.

The working machines 202 - 208 all include a machine control unit 214, an automation sensor suite 216 and machine control actuators 218. For discussion, these components will be discussed in the context of a single working machine 202. The machine control unit 214 may be a configurable machine control module, which is a specialized unit for automated management operations of the working machine 202.

The machine control unit 214 is configured to the machine control actuators 218 for managing the throttle, steering, power drives and other vehicular components to allow automated operation of the working machine 202. Example systems driven by the machine control actuators 218 include the engine 224 and the power take-off (PTO) drive 226 shown. The PTO drive 226 may be used to operate accessory equipment from the vehicle, such as a shredding system, a sprayer or any other rotary driven accessory component. In some embodiments, the machine control actuators 218 may control hydraulic or electric systems to drive additional or alternative equipment.

The machine control unit 214 also receives information and feedback from the automation sensor suite 216, which includes a variety of sensors to determine operational information, such as location, obstacle detection, speed, heading, PTO drive speed, lift loads and other information. Example sensors that are part of the automation sensor suite 216 include, but are not limited to, the optical sensor 220 and the location sensor 222 shown. The optical sensor 220 may be any number of structures for optical sensing, including cameras, laser detection, range finders and other optical sensor systems. The location sensor 222 may be a GNSS device, local geospatial system, inertial sensor, or any other structure for identifying location and altitude by WGS coordinates and heading or another reference system. For example, on a fenced property, each corner post may be assigned a designation and location may be defined based on a grid using the corner designations.

Each working machine 202 - 208 receives specific instructions from a control center or cloud automation system. The specific instructions are from a fleet mission plan, whereby a plurality of the working participants 202 - 208 collaborate to achieve the mission plan by completing their specific instructions. These instructions are received by the application gateways 210 and 230, which confirm that they are from an authorized source, parse and then send the instructions to the machine control units 214. The machine control units 214 follow the instructions by initiating and managing machine control actuators 218 based on the instructions and feedback from the automation sensor suite 216.

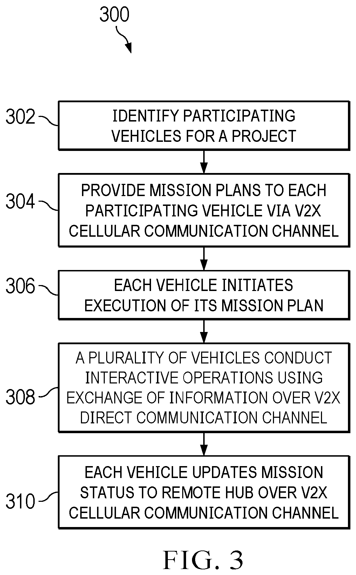

Figure 3 shows a system operation flow. The system process 300 tracks mission planning through implementation of a multi-vehicle project with interactive operations. The system may be implemented, and process conducted using a control center 114 and vehicles such as the working machines 202 - 208 described above.

In this embodiment, the process begins with identifying the selection of participating vehicles for a project as shown in box 302. The participating vehicles may be identified by an operator in setting up the request or selected by a cloud system from an available set of vehicles. The involvement of the cloud system in the identification of participating vehicles will depend on the vehicles available to the system. For example, if a lone farmer has one tractor with a tiller and another tractor with a seeder and the request requires both, these are the only available and identifiable options. In contrast, if a farm has a fleet of tillers and seeders, and the project only needs some of each, the participating vehicles may be identified as a subset of the available fleet.

After the vehicles are identified, box 304 illustrates that mission plans or machine specific instructions are provided to each participating vehicle via a cellular communication channel available on a combined V2X communication system in this embodiment. In some embodiments, mission plans may be machine specific instructions for a project, wherein multiple mission plans collectively achieve a project. In some embodiments, a single mission plan may be split into multiple machine specific instructions to achieve the project. In some embodiments, each vehicle may receive a copy of the same mission plan with an instruction or flag indicating the section of the mission plan that contains instructions for that machine. In this illustration, each vehicle receives a machine specific mission plan to collectively form the project plan.

In some embodiments, the mission plans are developed by the cloud management system and provided to the vehicles. The mission plans include instructions for vehicle operations including interactive operations between multiple vehicles. In some embodiments, the interactive operations are the primary operations, such as combine and grain bin systems. In other embodiments, the interactive operations reflect an ancillary operation, such as periodic refueling operations between longer sessions of shredding the field.

In box 306, each vehicle initiates the execution of its mission plan. At this step, each vehicle follows the execution instructions for the mission plan received over the cellular communication channel. The mission plan may call for individual operations to begin and run until an interaction event is needed or occurs.

As an example, a field clearing project may include a set of three shredding vehicles assigned to cutting the brush and a refueling vehicle to keep the shredders going. Each shredders' mission plan may define a starting point, a travel path and shredding boundaries. These boundaries may be designed to split the field into three parts for contemporaneous shredding operations. Each shredder may execute an initiation sequence to turn on the vehicle. It may also conduct a system check. In some embodiments, the mission plan will define the initial sequence for execution. In other embodiments the mission plan will call on an initiation sequence built into the vehicle's onboard automation control system. Once the system is initiated, the shredder will travel to the starting location for its mission plan. In some embodiments, the mission plan will include the path from the location of the vehicle to the starting location. When the vehicle is at the starting location to begin shredding, the vehicle will lower the deck height and engage the PTO drive to begin the cutting process and follow the designated path from the mission plan.

The refueling vehicle may also follow an initiation process and travel to the same field. In some embodiments, the initiation process may be delayed to allow the shredders to use fuel. The mission plan start may set the time based on the shredder's starting fuel levels and anticipated burn rate.

A plurality of vehicles conduct interactive operations using the exchange of information over a direct communication channel in box 308. The interactive operation from the mission plan involves two or more vehicles working collaboratively (e.g., in tandem) in close proximity. The V2X direct communication channel provides a real-time or near real-time communication platform for collaborative interaction. The communication rate may increase as the proximity between two vehicles reduces to ensure active and accurate interactions. In some embodiments, the application gateways may modify the messaging protocol for the V2X channel to reduce message size and increase transmission speed when two machines are operating in close proximity. The message content may be directed to specific information needed for the proximity interaction.

To continue the example above, the refueling vehicle mission plan may be configured to have the beginning of the refueling process coordinated to finish refueling all three shredders before any run out of fuel. As such, the first shredder may be refueled when at a quarter tank, while the third shredder is closer to empty when it is refueled.

Each interaction involves a shredder and the refueling vehicle entering close proximity. As the two vehicles approach each other, they begin exchanging information including position, heading and speed. Each of the two machine control units adjust operations to bring the interactive elements of each vehicle into position. For this example, the refueling vehicle may include an extended arm with a nozzle configured to engage the refueling port of the shredder's fueling tank. The two machines adjust positions to enter proper proximity, and the refueling vehicle may further adjust the extended arm for more precision controls to engage the nozzle with the fuel tank. The steady communication over the direct communication channel facilitates the accurate placement. For interaction while the vehicles continue to move and conduct operations, the direct communication allows the control systems to maintain position and movement throughout the process.

In box 310, each vehicle provides status updates to the remote hub or cloud management system over the cellular communication channel. After the interaction operation, each vehicle may provide updated information and status. For example, the shredder may update its fuel level and projected range of operation. In addition, ancillary updates, such as mission plan progress, may be sent as part of the post-interaction update. The refueling vehicle may similarly provide an update, which may include updated fuel information, amount of fuel transferred and next action updates.

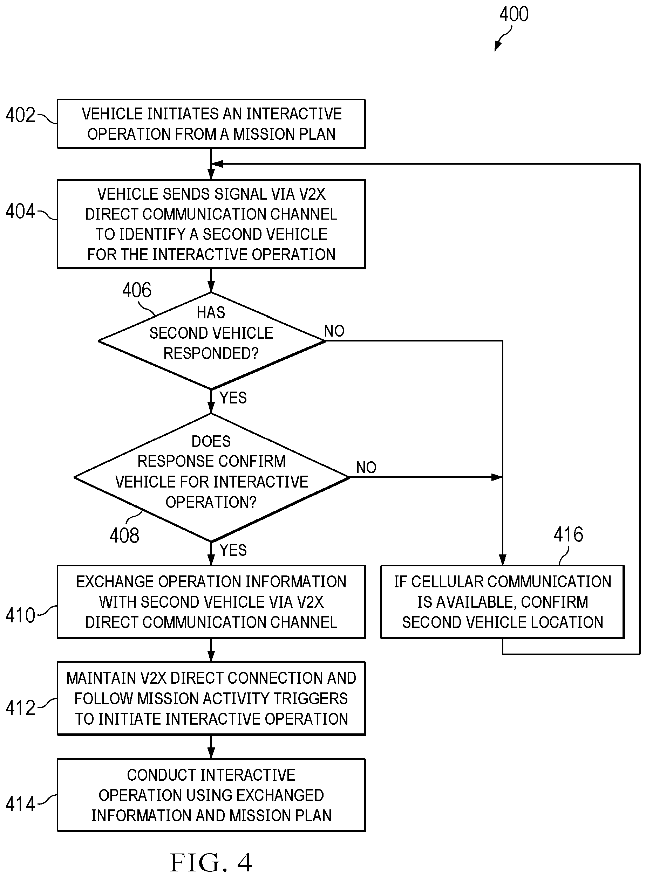

Figure 4 illustrates a vehicle interaction operation process 400. The process 400 may operate within the larger system operation 300. In other embodiments, it is one instruction set within a larger set of machine instructions designed to complete a mission plan.

This process 400 begins with a vehicle initiating an interactive operation from a mission plan as shown in box 402. In this embodiment, the vehicle has been assigned an interactive operation to complete. For example, a grain bin vehicle may be assigned an interactive operation of collecting harvested grain from a combine. The grain bin will initiate the interactive operation as it travels toward the collection position.

In box 404, the vehicle sends a signal via a short-range direct communication channel, such as a V2X channel, to identify a second vehicle for the interactive operation. This process is outlined in the decision blocks 406 and 408. First, the vehicle determines if a second vehicle has responded to its signal in decision box 406. If no response is received, the vehicle confirms if cellular communication is available in the area. If cellular communication is available, the vehicle confirms the second vehicle's location as shown in box 416. In some embodiments, this confirmation process may include sending a request for a second vehicle's location to a remote hub and receiving a last known location in return via the cellular communication capability of the V2X communication system. In other embodiments, the vehicle may send a request via the cellular system to the second vehicle to receive updated information.

If the first vehicle does receive a response from a second vehicle, the first vehicle determines if the response confirms that the second vehicle is intended for interactive operation as shown in box 408. If not, it returns to box 416 with the first vehicle also confirming a second vehicle location via cellular communication if available.

If the second vehicle's response confirms the interactive operation, the first and second vehicle exchange operation information via the direct communication channel in box 410. This information exchange may include position, heading and speed information along with potential additional sensor information, such as current load, fuel levels, obstacle detections, etc.

Once the two vehicles are in operational range, the vehicles maintain direct communication connections and follow the mission activity triggers to initiate the interactive operation as shown in box 412. The direct communication connection is used to maintain up to the moment information for the machine control units to drive the two machines into place. The interactive operation may be any collaborative operation activity, such as refilling an herbicide supply to eliminate certain weeds in a field, loading hay bales on an automated transport, collaborative tilling and seeding operations, and other operations. The initiation of the interactive operation may be the position adjustment and preparation for collaborative operation. For example, initiating the refilling of a fertilizer supply on an automated fertilizer may be adjusting the refill arm from the tender machine over the fertilizer bin on the automated fertilizer.

After initiation, box 414 has the vehicles conduct the interactive operation using exchanged information and the mission plan for the project. Conducting the operation for some mission plans includes ongoing interaction through a project, such as a grain bin operating in position between two combines to collect and hold the harvested grain until the bin reaches capacity. In this example, the grain bin may have required communication and responses from both combines and all three machines may be set for collaborative operation. As another example, a concrete delivery vehicle may operate collaboratively (e.g., in tandem) with a boom pump for delivering the concrete to the work site.

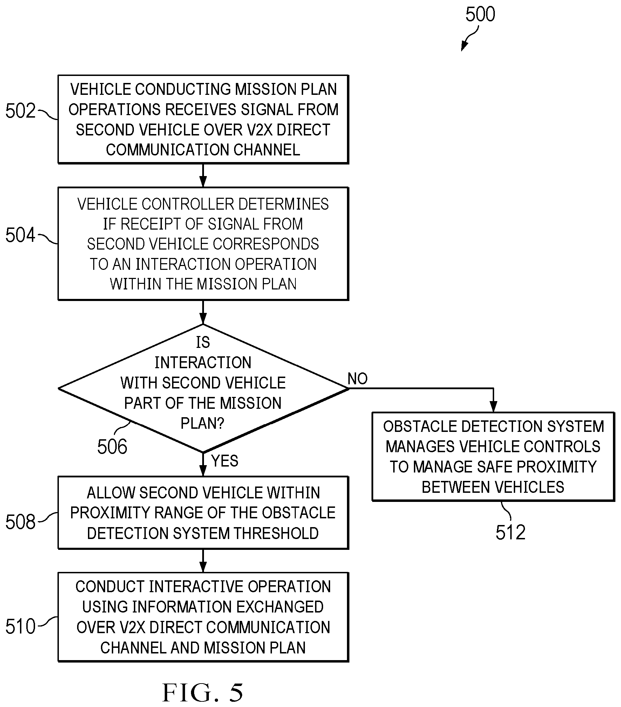

Figure 5 illustrates another vehicle operation system 500 for addressing approach or proximity to another vehicle. The vehicles or working machines that implement this system 500 may include the V2X or other combined communication systems discussed herein.

The process begins in box 502 with the first vehicle conducting mission plan operations, and during the process receiving a signal from a second vehicle over a V2X short range communication channel. In some embodiments, the overall system of vehicles may be configured to periodically ping for other vehicles using the short-range communication system as an additional safety feature. This encounter may also arise when the second vehicle is searching for an interactive machine to pair with for an interactive operation.

The vehicle controller then determines if the receipt of a signal from the second vehicle corresponds to an interaction operation within the mission plan in box 504. The decision box 506 addresses the outcome of this determination as whether interaction with the second vehicle is part of the mission plan. The vehicle controller may first confirm if the mission plan includes an interactive operation. The vehicle controller may also confirm if the second vehicle is applicable to any interaction in the mission plan. If the answer is no to either confirmation, interaction with the second vehicle is not part of the mission plan and the controller uses the obstacle detection system to manage vehicle control and safe proximity between the vehicles as provided in box 512.

If interaction with the second vehicle is part of the mission plan, the vehicle interaction operation system allows the second vehicle within the proximity range of the obstacle detection system threshold as shown in box 508. In some embodiments, the second vehicle is not seen as an obstacle if the controller determines that it is part of an interaction operation. In other embodiments, the obstacle detection system modifies the proximity requirements when the second vehicle is identified as part of an interaction operation. In some embodiments, the obstacle detection sensors are used to assist in management of the interaction operation.

In box 510, the first and second vehicles conduct an interactive operation using information exchanged over a V2X direct communication channel and mission plan. As discussed above, the interaction operation may occur while one or both vehicles continue to follow the mission plan operation. As discussed, some interactions are designed for limited interaction, such as refilling or refueling one vehicle. Other interactions may be longer term interactions, such as a bulldozer and pan-scraper working to terraform land for a stock tank and field.

In some embodiments, the multi-channel communication system also improves overall communication and system updating in remote and low connectivity areas. The fleet of vehicles may periodically use the direct short-range communication to share machine specific status updates along with a last network update or network connectivity characteristic with other local vehicles in the fleet. If one vehicle has better network connectivity, such as the cellular connectivity, that vehicle can pass through all low connectivity or delinquent status updates from other vehicles in the fleet. This improves the overall network awareness of the fleet activities and the ability to manage a collective project and mission plan efficiently.

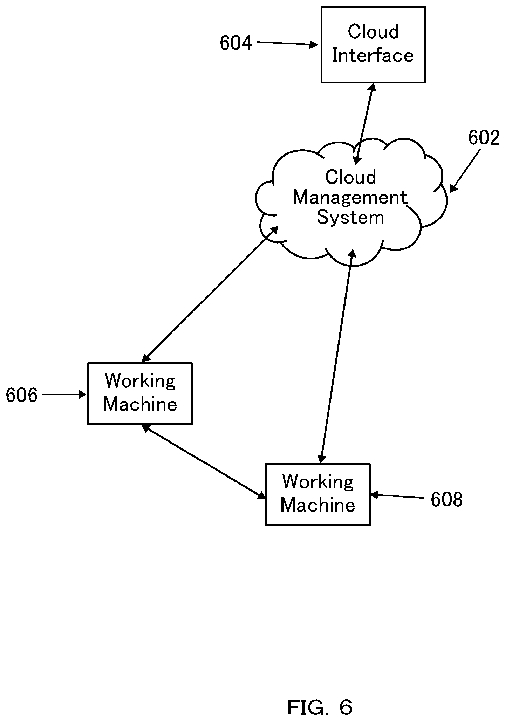

Figure 6 shows a system layout for an automated working machine system. Those skilled in the art will recognize that the two working machines 606 and 608 are an illustrative example, and the application of the system is applicable to many working machines and combinations. The working machines may be tractors, lawnmowers, agricultural equipment, road construction equipment, terraforming equipment, building machines and other working machines.

This system includes the cloud management system 602 remotely interacting with working machine 606 and working machine 608 through long range communication channels. In addition, the cloud management system 602 also communicates with a cloud interface 604 in this embodiment.

The automated working machines 606 and 608 each have a control system to drive multiple actuators and operational controls through an electronic control unit. These operational controls manage the direction and speed of the working machines 606 and 608 with throttle and steering controls. In addition, the working machines 606 and 608's control system may manage additional accessory component systems, such as buckets, scrapers, fill arms, towed applicators, etc. In some embodiments, the control system may be connected to sensor systems associated with the accessory component to determine operational status and needs, such as refilling, drag adjustments, speed adjustments or other accessory needs. For example, the accessory component or implement may indicate that a working machine should reduce travel speed to correspond to an implement's application rate.

The automated working machines 606 and 608 may also include communication systems, such as a V2X system with a cellular communication channel and direct communication channel. Those skilled in the art will recognize that the communication systems and communication modules are a known class of structures that provide communication capabilities, and include communication chipsets, antennas and other known structures. In addition, alternative communication systems may be employed to the example V2X system, and the communication module may incorporate different combinations of short- and long-range communication capabilities. In some embodiments, the communication systems and modules may support tiered communication options with varied ranges and bandwidths. For example, a communication module may include a short-range high bandwidth option, an intermediate-range low bandwidth option, and a long-range high bandwidth option. The communication hub on each working machine 606 and 608 may manage the communication options to limit high-bandwidth communication to needed operations and rely on low bandwidth operations as a default for a fleet.

As the working machines 606 and 608 operate, they each may send machine status updates over the cellular communication channel to the cloud management system 602. In some embodiments, the status updates are sent in near real-time. In other embodiments, a periodic update system may require each machine 606 and 608 to send updates on a set time schedule. In some embodiments, the status updates are sent when a trigger condition is encountered. For example, if the first working machine 606 encounters a series of unexpected obstacles, the first working machine 606 may send an obstacle notice to the cloud management system 602.

If the working machine 606 continues to follow its machine instructions without deviation, the working machine 606 may not send a status update. In some embodiments, the working machine 606 may send an indication that it remains on track instead of a status update if the working machine 606 is continuing to follow its machine instructions without deviation. This indication may be a simplified message to limit use of the communication system and network.

The working machines 606 and 608's status updates may include position information, coverage area, obstacle information, path adjustments, speed, current operational diagnostics (such as fuel level or battery life), current accessory status and other information. Using the updated information, the cloud management system 602 may confirm whether or not the working machines 606 and 608 are operating consistent with the current mission plan or had to deviate. If the cloud management system 602 identifies a deviation, the cloud management system 602 may automatically revise the mission plan based on the updated information. For example, if the working machine 606 has operated at a slower pace to address detected obstacles and is behind schedule, the cloud management system 602 may adjust the mission plan to shift to another available and capable machine to compensate for overall timing and efficiency to complete the operations.

When the cloud management system 602 revises the mission plan, it may issue new machine operation instructions, which are sent to the working machines 606 and 608 over the cellular communication channel. The working machines 606 and 608 update their instructions and continue to operate and send updates.

The cloud interface 604 in this system may be a hub for a remote-control center, which is able to manage one or more fleets of working machines. The cloud interface 604 communicates status information for a fleet of working machines or a plurality of such fleets for display or other output at a remote-control center. The cloud interface 604 may also receive instructions or requests from the remote-control center, which may be processed by the cloud management system 602. In some embodiments, the cloud interface 604 may operate as an entry point for external user interfaces, such as phones, computers, tablets and other devices used by remote teams to define, request, update or manage working machine projects.

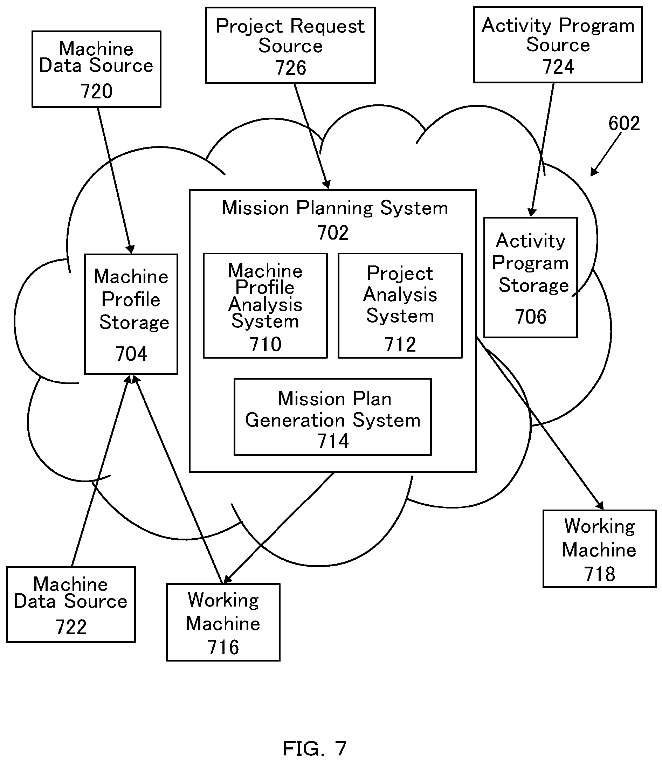

Figure 7 illustrates an embodiment of a system using the cloud management system 602 to manage a machine fleet. The cloud management system 602 includes a mission planning system 702, a machine profile storage 704 and an activity program storage 706 in this embodiment. This embodiment shows the mission planning system 702 including a machine profile analysis system 710, a project analysis system 712 and a mission plan generation system 714. In some embodiments, the mission planning system 702 may include a path planning system as an additional or alternative system component.

In some embodiments, these system components may be discrete components within the cloud management system 602 or one or more dedicated servers. In other embodiments, the system components may be integrated. In some embodiments, certain component systems are maintained inside the mission planning system 702, while other system components are operatively connected to provide a service to the mission planning system 702 over a wireless connection, a wired network connection or direct wired connection, such as over a bus interface.

The machine profile storage 704 and the activity program storage 706 may be any type of electronic storage structure or memory device. In addition, the data, scripts and other information stored in the machine profile storage 704 and the activity program storage 706 may be stored within the memory structure in a variety of formats, such as a database, an indexed file system or other format.

The mission planning system 702 may access or receive information from the machine profile storage 704 and the activity program storage 706. In some embodiments, the mission planning system 702 may also send information to the machine profile storage 704 or the activity program storage 706.

In some embodiments, the machine profile storage 704 maintains machine profiles for a plurality of working machines. The machine profiles for each machine may include detailed identification information, operational information and usage information specific to the machine. The identification information may include the machine's make and model data, serial number, owner or user information, and/or other identifying information.

The operational information may include various machine operation information and capabilities, such as speed, torque, turn radius, size, PTO drive speed, sensor arrays, automation kits, control information and other information. Additional information may include operation information for the machine-specific tools, such as tool load type, movement range, lift loads, reach, operational speed ranges, interactive limitations, and other information. For machines that may use a variety of optional accessories, the relevant corresponding information for each optional accessory may also be stored. In some embodiments, the base information for the machine may be stored with information for each optional accessory to account for any changes to the machine's operational information caused by connection to one accessory or another. In some embodiments, the optional accessories will include adjustment information that may be used during the analysis to update the machine operational information based on the connected accessory.

The machine profile's usage information may include operational history of the machine, information regarding known wear and tear or damage to the machine or specific components, scheduling information or other information regarding the use of the specific machine. The machine profile may include additional information about the current status of the machine, such as location, battery or fuel levels, currently attached accessories, and other status information. In some embodiments, the types of information may be stored as separate records for independent access and analysis. For example, the machine profile may include machine-specific characteristics, which operate as a configuration or information file for the machine. Separately, the system may store telematic and usage records, which indicate historical operations, usage data and logs, and current status information.

The activity program storage 706 may include a selection of activity scripts for various working machine operations. The activity scripts may include program code to achieve specific activities by a machine. For example, one activity script may provide an initiation process for turning on a class of machines using a certain automation kit or electronic control unit. Some activity scripts may be operable by multiple machines while others are more limited. Some activity scripts may be machine-specific scripts.

In some embodiments, the mission planning system 702 operates on the same structure, such as a server, with the machine profile storage 704 and activity program storage 706. In a cloud structure, such as the cloud management system 602 shown, the mission planning system 702 may be connected to the machine profile storage 704 or the activity program storage 706 over one or more communication systems depending on the underlying server array structure. For example, the mission planning system 702 may be implemented on a first server, using a processor and program memory connected via a wired bus. When evaluating a machine profile, the mission planning system 702 may use a first server communication card to access the Internet or other network in connection with the machine profile storage 704.

In some embodiments, the processing operations may also be shared among multiple processors or separate computers to speed the evaluation through parallel processing operations. For example, when identifying capable machines, the machine profile analysis system 710 may implement parallel processing of apportioned sections of the machine profile storage 704 to identify all capable machines. As another example, the mission planning system 702 may assign separate computers to parallel process two distinct project requests.

In this embodiment, the machine profile storage 704 may receive data from machine data source 720 and machine data source 722. Embodiments of the system may include any number of machine data sources 720 and 722. The machine data sources 720 and 722 may include external user interfaces, such as phones, computers, server systems, tablets and other devices, used by manufacturers, mechanics, machine users, aftermarket suppliers and other sources. In addition, machine profile storage 704 may receive information from working machines 716 and 718 directly.

The activity program storage 706 receives information from activity program source 724 in this embodiment. The system may include additional activity program sources 724 in some embodiments. The activity program source 724 may be external user interfaces, such as phones, computers, server systems, tablets and other devices, used by any developer, programmer, manufacturer, user, aftermarket supplier or other entity that may prepare activity scripts for working machines. In some embodiments, the machine data source is 720 and 722 and the activity program source 724 may be the operator of the cloud interface 604.

In this embodiment, a single project request source 726 is identified. In other embodiments, a system may have multiple project request sources. The project request source 726 maybe external user interfaces, such as phones, computers, server systems, tablets and other devices, used by any machine user or entity. In some embodiments, the project request source 726 maybe the operator of the cloud interface 604. The cloud interface 604 may receive requests from the project request sources 726 and direct the request to the appropriate mission planning system 702.

In some embodiments, the mission planning system 702 or the cloud interface 604 may translate a project request into a standard format for the mission planning system 702 to parse and analyze. For example, the project request received from the project request source 726 may be a natural language request from the project manager, such as a request received in an audio format. The mission planning system 702 may convert the audio to text and identify the project definitions. In some embodiments, the mission planning system 702 may only convert the applicable key words for the project.

The mission planning system 702 may analyze the project request in the project analysis system 712. The project analysis system 712 may receive a complete formatted request. In some embodiments, the project analysis system 712 may include the request processing steps to parse the project request into the analysis format. The project analysis system 712 may further evaluate the project definitions and goals to identify machine selection criteria (such as machine capabilities, locations, ownership limitations, scheduling availability, etc.), other fleet requirements, project operational areas, project timelines and other constraints, project goals and other project information.

The machine profile analysis system 710 may access machine profile storage 704 to review machine profiles and identify machines that fit a project request. In some embodiments, the machine profile analysis system 710 may send a query to the machine profile storage 704 requesting machine profiles that meet a requirement of the project. For example, if the project requires machines located around a specific area, the machine profile analysis system 710 will send a query to the machine profile storage 704 requesting all machines that are within a certain radius of the project area. In some embodiments, receiving a select group of the machine profiles will increase the efficiency in the processing analysis to identify which machines are appropriate for the project. In some embodiments, using a select group of machine profiles may reduce processing requirements for the machine profile storage 704 to allow other requests to occur in parallel without overburdening machine profile storage 704's processor.

The machine profile analysis system 710 receives machine criteria requirements, location information and other information from the project analysis system 712 or directly from a project request source 726. The machine profile analysis system 710 may use machine criteria requirements during the analysis of the machine profiles to identify preferred machines for a project. In some embodiments, the machine profile analysis system 710 and the project analysis system 712 will collaborate to identify the preferred machines and define project requirements that fit the selected machines. For example, if multiple options exist for the capabilities necessary to complete a project, the machine profile analysis system 710 and the project analysis system 712 may determine which machines are available and confirm that the project definition is consistent with the capabilities of the available machines.

The mission planning system 702 may then select activity scripts from the activity program storage 706 that are consistent with the machines selected through the machine profile analysis system 710. In some embodiments, the mission plan generation system 714 may select activity scripts from the activity program storage 706 that are compatible with the selected machines and direct operations of the machines necessary to achieve one or more capabilities needed for the project.

Once the activity scripts are selected by the mission plan generation system 714, the mission plan generation system 714 may create additional necessary scripting to achieve the project and tie together the various activity scripts needed for each operation. The mission plan generation system 714 will create individual plans for each selected machine that are compiled to form a complete mission plan for the project. The mission planning system 702 may then issue the mission plan to each working machine 716 and 718. The mission plan communication may be sent using a communication system network card over one or more communication channels to the communication modules and electronic control units on each working machine 716 and 718.

As with other embodiments, working machines 716 and 718 may be any number of working machines. In addition, working machine 716 and working machine 718 may be the same type of machine in some embodiments. For example, working machines 716 and 718 may both be tractors with mowers that are assigned to a common field to share the responsibility of mowing the entire field. In other embodiments, working machine 716 may be a distinct type of machine from working machine 718. For example, working machine 716 maybe a forklift designed to move loads around at a worksite and working machine 718 may be a crane at the worksite designed to lift certain loads up to the higher levels of a building under construction.

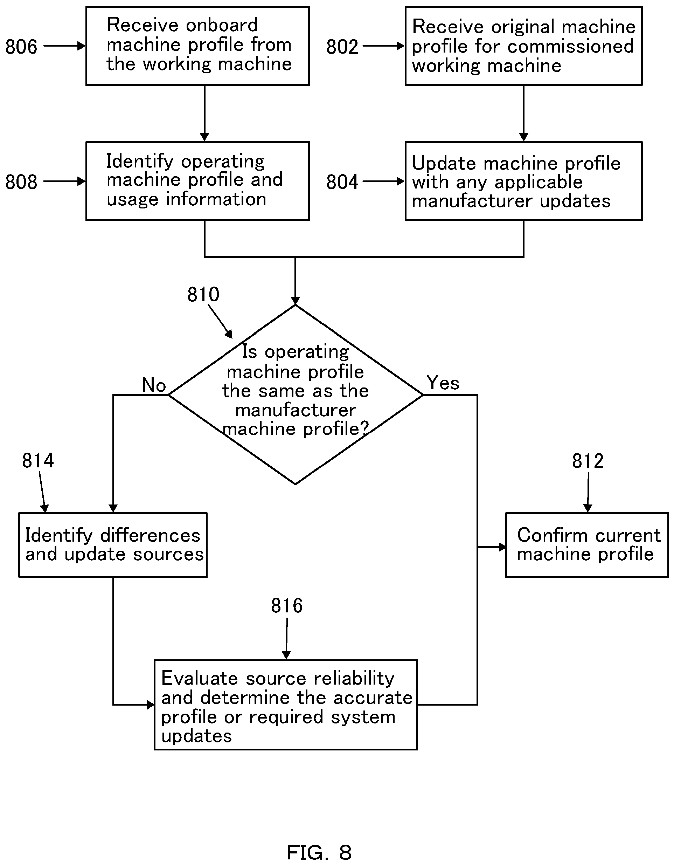

Figure 8 illustrates a flow chart for creating or confirming the machine profile, which may be stored in the machine profile storage 704. The process for developing the machine profile in the cloud management system 602 may be initiated through several different processes. For example, establishing a machine profile for a manufacturer that is associated with the cloud management system 602 may differ from the process for establishing a machine profile by a user of an existing machine.

In box 802, the original machine profile may be received for a newly commissioned working machine. This original machine profile may be received through the cloud interface 604 or a dedicated interface for the specific manufacturer that is commissioning the machine. In some embodiments, the original machine profile for a newly commissioned working machine may be a default machine profile for a certain type, class or model of machine from the manufacturer. In some embodiments, the manufacturer may provide a machine-specific machine profile that is based upon testing or other steps that are used to determine the data for the machine profile.

In some embodiments, the original manufacturer may have provided updates for a machine profile. In box 804, the cloud management system 602 may update machine profiles with any applicable manufacturer updates that have been received. In some embodiments, the updates may reflect software, firmware or other operational information for the machine, and affect how mission plans should be assigned and scripted for the machine to operate.

In some embodiments, the manufacturer may use a default machine profile for a newly commissioned working machine and subsequently provide updates with more detailed information for that machine. For example, every tractor of a certain make and model that comes off the assembly line may be commissioned with the same machine profile at the date of commissioning. Once commissioned, the manufacturer may test some of the tractors to determine accuracy of their machine profile data such as a turning radius, speed and power take off rotations. If the original machine profile data does not match the test data, the manufacturer may issue an update for the machine profiles related to the batch of machines that were commissioned together.

In some embodiments, the updates are managed within a manufacturer's portal in the cloud interface 604. In other embodiments, the updates may be integrated into the existing machine profile within the machine profile storage 704 of the cloud management system 602.

In box 806, the cloud management system 602 may receive an onboard machine profile directly from the working machine. In some embodiments, the onboard machine profile may be received when a user or project manager is setting up one or more vehicles in the cloud management system 602. This may be the first machine profile loaded for the machine or the machine profile may correspond to a previously loaded profile for a machine commissioned by the manufacturer. The onboard machine profile may be received through the cloud interface 604 or a user-specific interface. For example, a company's fleet manager may load machine profiles for new machines through a company's portal in the cloud interface 604.

In box 808, the cloud management system 602 identifies the operating machine profile elements and usage information. In some embodiments, the operating machine profile elements may correspond to the data contained in the original machine profile. For example, the operating machine profile elements may include features such as speed, turning radius, load capacity and additional operational information.

The usage information in the machine profile may reflect activity of the machine since it was commissioned. For example, the usage information may include information such as the machine's mileage, load repetition count, accidents or other damage, and other machine history. In addition, the usage information may include user settings for the machine that may differ from the default capabilities. For example, a user may set a modified maximum load capacity below the machine's capability. As another example, the user may set a minimum fuel level for operational activities.

Decision box 810 represents a comparison and analysis to determine whether the operating machine profile is the same as the manufacturer machine profile. If the operating machine profile is the same as the manufacturer machine profile, the system confirms the current machine profile in box 812. The confirmed current machine profile will include the usage information supplied by the machine.

If the only machine profile was received directly from the machine in box 806, that machine profile will be confirmed as the current machine profile. In some embodiments the current machine profile may be updated with any additional manufacturing updates including software and/or corresponding machine test updates regarding the operations of the machine.

If the comparison and analysis in decision box 810 indicates that the operating machine profile is not the same as the manufacturer machine profile, the process leads to box 814 where in the cloud management system 602 may analyze and identify the differences between the operating machine profile and the manufacturer machine profile. Further in box 814, the cloud management system 602 may identify the sources of any updates relating to the distinction between the operating machine profile and the manufacturer machine profile.

In box 816, the cloud management system 602 may evaluate the source reliability for each update relating to the distinction between the operating machine profile and the manufacturer machine profile. In some embodiments, the evaluation for source reliability may consider source identification information including authorization codes and other information indicating that the update was approved by a reliable source. In some embodiments, the cloud management system 602 may include security systems to check the source of the update. These security features may include any number of software security codes or keys designed to ensure only those that are authorized to update information have been able to access and instruct such updates. In addition, the cloud management system 602 may confirm that any updates are compatible with the class, make and model of the machine to which they are applied.

The cloud management system 602 may further determine the accurate profile based upon the analysis. When the cloud management system 602 determines updates from reliable sources resulted in distinctions between the two machine profiles, the cloud management system 602 may prioritize updates based upon the most recent changes from a reliable source. For example, if the distinction is between load capacity data in each machine profile, the cloud management system 602 may determine that the manufacturer machine profile includes an update from the manufacturer on load capacity for the original lift while the operating machine profile includes a modified load capacity based on an accessory addition that increases the load capacity, which was installed after the machine left the manufacturer. In this example, the operating machine profile will be treated as the correct machine profile.

In addition to determining the accurate profile in box 816, the cloud management system 602 may identify required system updates for the machine if the manufacturer's machine profile is considered more accurate or if updates from the manufacturer machine profile have not been applied to the operating machine profile. In some embodiments, the cloud management system 602 may issue a report or other message to the operator or company responsible for the machine. In some embodiments, the cloud management system 602 may have authorization to send the required updates to the machine directly. In such embodiments, the cloud management system 602 may also send a notice to the operator or company responsible for the machine.

Once the accurate profile is identified, it is confirmed as the current machine profile in box 812. The current machine profile is stored in the machine profile storage 704. This machine profile may be used for accurate analysis and planning for upcoming project opportunities.

In some embodiments, third party accessory companies, installation companies or repair shops may have interfaces in place to load or update a machine profile to the cloud management system 602. The accessory installers and repair shops may also use a service tool to update the machine directly when installing a new accessory or conducting maintenance or repairs on the machine. In some embodiments, third party accessory companies may send accessory specific profiles to the cloud management system 602, which may be stored in the machine profile storage 704. These accessory-specific profiles may be associated with or integrated into a machine profile when a machine update is received indicating that an accessory has been added or attached to the machine.

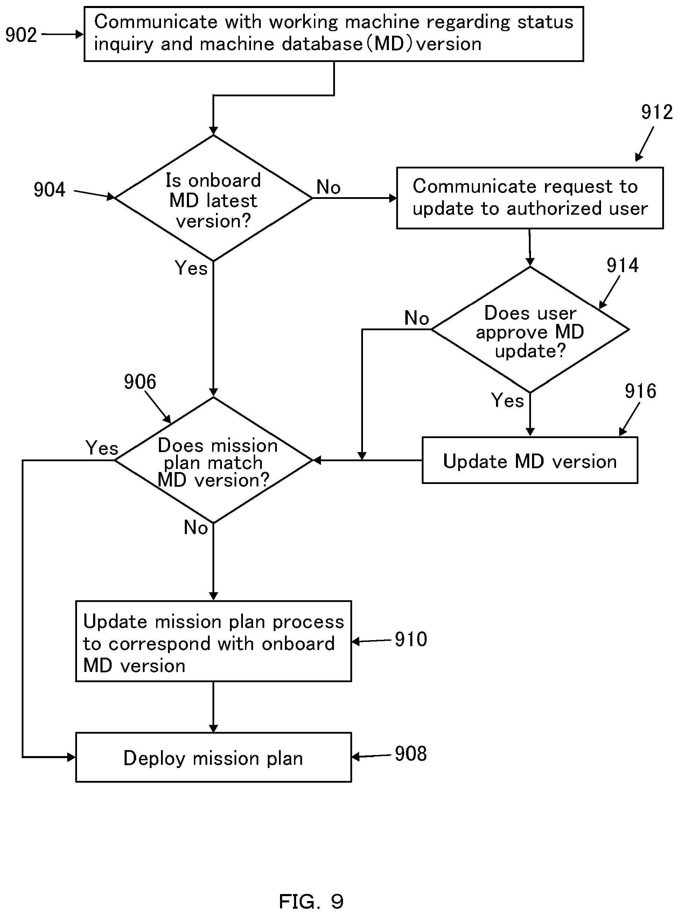

Figure 9 illustrates another embodiment of a flow chart for confirming the machine database version used in the mission planning system 702 corresponds to the machine database version onboard a machine. While the illustration herein is discussed with respect to a single machine, working machine 716, the process may be mirrored or intertwined with confirmations for multiple working machines. The machine database may correspond to the machine's operating parameters and features within the onboard machine profile in some embodiments. In other embodiments, the machine database may be an alternative reference to the complete machine profile, including operating parameters and features along with user settings and usage history.

In box 902, the cloud management system 602 communicates with a working machine 716 regarding a machine status inquiry and the onboard machine database version. In some embodiments, the working machine 716 may initiate the communication by sending a status and current machine database identification as a check-in operation to the cloud management system 602. The cloud management system 602 may process the version verification prior to storing the current machine information in the machine profile storage 704.

In some embodiments, the cloud management system 602 may send an inquiry to the working machine 716 to maintain an updated status. The cloud management system 602 may alternatively request the machine information when a mission plan using the machine is under consideration or development by the mission planning system 702.

The machine status inquiry may seek information relating to the current location, operational status (fully charged, current maintenance state, availability for automated assignment, etc.) and any scheduled events or activities assigned to the onboard system. For example, working machine 716 may be independently operable by direct communication or programing from the user. If the user has assigned the working machine 716 offline status for certain times to conduct maintenance or move the machine, the onboard status may include such information.

In the decision box 904, the system determines if the onboard machine database correlates to the latest machine database version. In some embodiments, this machine database version verification may be conducted in an interface component for the mission planning system 702. In other embodiments, this verification may be conducted within a component of the mission planning system 702.

Those skilled in the art will also recognize that embodiments of the system may shift one or more of the decision elements and approvals to a user device or the machine's control system. For example, the cloud management system 602 may send the latest machine database version identification and request a verification report from the machine, wherein the machine compares the latest version identification with the onboard version identification and reports the match or mismatch back to the cloud management system 602.

In some embodiments, the machine database version verification may be based on a comparison of version identification codes between the onboard code and the latest code. In such embodiments, each code may be used to track a version of the machine database. In such embodiments, manufacturer updates may create an entirely new code while other modifications are tracked through an appended code. For example, if a third party modifies the machine to include a new accessory, the code may include the current manufacturer code plus an appended code for the accessory.

In some embodiments, the machine database version verification may review and compare one or more machine characteristics or capabilities. This evaluation may be in addition to an identification comparison. In some embodiments, the cloud management system 602 will develop a report of discrepancies between versions and identify sources for each discrepancy, which may range from a version update to machine modifications to precision testing updates. This information report may be shared with an authorized user or entity to identify options for updating the machine database. The report may also or alternatively be provided to the manufacturer for further evaluation. This option may be a default option when precision testing or measurements are the basis for a discrepancy.

If the onboard machine database is the latest version, the cloud management system 602 determines whether a mission plan is prepared for the machine database version on the machine in decision box 906. In some embodiments, the mission plan may include machine database version identification for the selected machine. If the mission plan was created using the latest version of the machine database information and the onboard machine database matches, the mission plan correlates to the machine's operational system.

In other embodiments, the mission plan may be developed for an older version of the machine database, which may not work accurately with a different version. As those skilled in the art will recognize, the operability and accuracy of a mission plan depends on the use of corresponding machine characteristics. For example, if a machine characteristic correlates a first distance to a set movement speed and this characteristic changes between versions, providing an instruction to move at the set speed for a certain time will lead the machine to reach different locations depending on the onboard version. These verifications are designed to limit the potential for any errors caused by discrepancies in version definitions.

If the mission plan is configured for the onboard machine database version, the mission planning system 702 may deploy the mission plan to the vehicle in box 908. The deployed mission plan may assign a schedule for the operation or initiate the operation as appropriate.

If the mission plan is configured to a different machine database version than the onboard version, the mission plan is updated or regenerated to correspond with the onboard machine database version under box 910. Once the updated mission plan is established, it is deployed to the machine in box 908.

Returning to the evaluation of the onboard machine database in box 904, the evaluation may determine that the onboard version is not consistent with the latest machine database version used in the cloud management system 602. In box 912, the cloud management system 602 will then communicate a request to update the machine database version to an authorized user for the machine. The request may be communicated through a voice system, an email system, a messaging system, within an operations application or any other request for feedback system. For example, the system may initiate a popup within a project control application on the user's phone, tablet or computer. In response, the user may provide an update approval.

In decision box 914, the system determines if the user approved the machine database update. If the user approves the update, the machine may receive the latest machine database version update. In some embodiments, the cloud management system 602 may send the update over the air to facilitate an immediate revision update. In other embodiments, the cloud management system 602 may send the update to the user, a maintenance service or device to facilitate a direct upload to the machine. In yet other embodiments, the cloud management system 602 may submit a request with a third-party supplier, such as the manufacturer, to facilitate the machine update.

In box 916, the machine is updated with the machine database version. The length of time needed to update the machine may depend on the nature of the update and communication connections. In some embodiments, the need to update may trigger a replanning evaluation for the mission planning and overall project. For example, if the update time is anticipated to exceed a threshold, the mission planning system may determine if an alternative machine or fleet may be used for the project and reassign operations accordingly.

Once the machine is updated with a new version of the machine database, the flow leads to previously described decision box 906 to evaluate whether the mission plan is configured to the onboard machine database version.

In this embodiment, the flow also leads to previously described decision box 906 to evaluate whether the mission plan is configured to the onboard machine database version if the user does not approve the machine database update in decision box 916. In some embodiments, the user may be provided with alternative machine database versions to select from if the latest version is not approved. Another alternative may be to allow custom modifications to a machine database characteristic, which may be provided to the mission planning system 702 for redefining a mission plan with characteristics consistent with the machine.

If the mission plan matches the machine database version and any modified characteristics, the mission plan may be deployed. If not, the mission planning system 702 recreates a mission plan using the corresponding onboard machine database and characteristics before deploying the mission plan.

In some embodiments, the evaluation for matching the mission plan to the machine database may be limited to characteristics and capabilities required for the mission plan or safety interactions. As such, a partial match may be sufficient for some embodiments. For example, when a mowing project is assigned to a machine with mowing and front-loading capabilities, the match assessment may only consider characteristics relating to the mowing procedures and not detailed characteristics for the front loader.

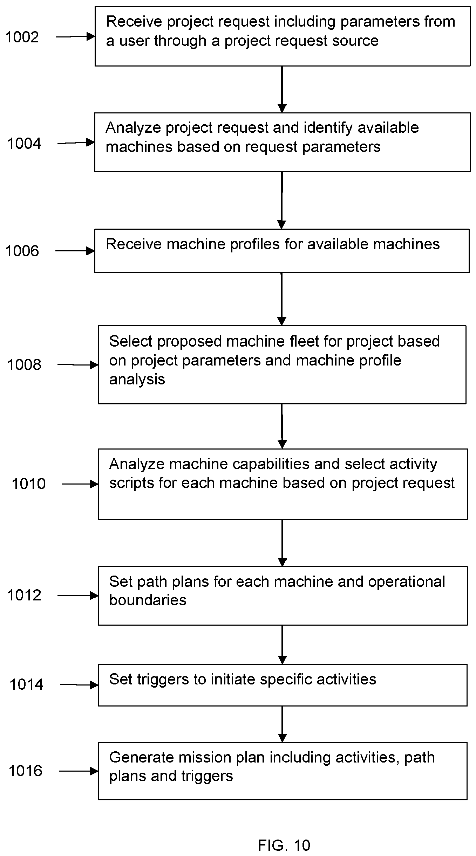

Figure 10 illustrates a process for generating mission plans based upon project requests. The order of events in the process may change in some embodiments. In some embodiments, multiple steps may occur in parallel to increase efficiency in the processing and machine planning. In some embodiments, the project request may define certain elements allowing one or more steps to be skipped or optional in the development of a mission plan.

In box 1002, the cloud management system 602 receives a project request including parameters from a user through a project request source. The project request source may be a phone, computer, tablet or other device used by a project manager to request a new project or redefine an existing project. In some embodiments, the project request source may send the request through cloud interface 604.

In some embodiments, a project request is a defined request for a project utilizing automated machinery. For example, a farmer may submit a request for planting a field, which may require tilling equipment and planting equipment to be pulled behind a tractor. The project request may include multiple parameters and information about the project necessary to define the scope of the project, including anticipated machine capabilities and goals. For example, the project request may identify specific fields or location boundaries for the project, the crop type, the company or project lead information, and timing windows for the project. In some embodiments, the project request may provide available machine information or other fleet limitations.

In some embodiments, the project request may be a form that is presented to a user. The form may be presented to a user or an entity's project lead on the tablet, phone, computer or other user device. The form may include necessary information for a user to provide to request a project. For example, the form may require location information, requestor information, machine limitations, project goals, project time frame, project limitations and other information framing the project. The form may also include optional information categories, such as required or available machine limitations, scheduling requirements, path plan requirements, known obstacles, related projects and priorities, and other information that is relevant to the project.

In some embodiments, the mission planning system 702 may receive natural language or alternative project request formats, which are then transferred or translated into a categorized form for review and analysis. The standardized formats for project request information may be stored in an indexed database or relational database to streamline the analysis process.

In some embodiments, a plurality of project requests may be received and under analysis simultaneously. These requests may be organized to increase the analysis efficiency. For example, the projects may be prioritized by request timestamp and categorized by operating timeframes for the projects.

In box 1004, the mission planning system 702 may analyze the project request and identify available machines based on request parameters. For example, the mission planning system 702 may review the project request to determine if any machines were identified in the request as default options. As another example, when the machines have not been identified in the project request, the project analysis system 712 may identify location scheduling or other machine related limitations for the machine profile analysis system 710 to consider. The machine profile analysis system 710 may then identify the available machines based upon relative location to the project request location, availability during the defined window of the project request or other limiting information from the project request.

For example, the project analysis system 712 may send a query to the machine profile storage 704 to receive identification of all machines associated with or available to the requesting entity and within a radius of the project location. Those skilled in the art will recognize that the applicable radius to identify available machines within a distance of the project location may vary depending on the project, the machine type and mobility, and machine redundancy. For example, a farming enterprise with multiple fields spread out over a large tract of land and having multiple machines of the same type may provide a radius intended to capture only one or two groups of the machines closest to the project location. As another example, the farming enterprise with large tracts of land but only a few of any given type of machine may have a larger radius to ensure all the options are included when selecting preferred machines.

Once the available machines are identified, the machine profile analysis system 710 may receive the machine profiles for those available machines as indicated in box 1006. The machine profile analysis system 710 may receive the machine profiles from the machine profile storage 704 based on a request from the project analysis system 712 indicating the identified available machines. In some embodiments, the machine profile analysis system 710 may access the machine profiles for the available machines within the machine profile storage 704. In such embodiments, the machine profile analysis system 710 may analyze one or more features or characteristics found in the machine profiles by sending queries to the machine profile storage 704.

In box 1008, the machine profile analysis system 710 may select a machine fleet for the project based upon project parameters and the machine profile analysis. For example, the machine profile analysis system 710 may identify the machines having capabilities necessary for the project request and that are located closest to the project location. In some embodiments, the machine profile analysis system 710 may also evaluate the readiness of each machine to participate in the project. For example, the machine profile analysis system 710 may evaluate the machine's fuel levels, known wear and tear, maintenance schedule and other information regarding the ability to participate in the project.

In addition to the preferred machine features, the mission planning system 702 will select the machine fleet for the project based on an analysis balancing a variety of factors on the project, such as efficiency, economic requirements (fuel cost, transportation requirements, etc.), and project area capacity. As such, the selection of the proposed machine fleet will look at the availability of certain types of machines and the combination of available machines that provide preferred benefits.

For example, the mission planning system 702 may determine the most efficient means to fertilize the defined project area is to operate six automated fertilizer applicators pre-filled with fertilizer in tandem. If the required machines are available, the mission planning system 702 may assign the preferred six fertilizer applicators as the machine fleet. If six fertilizer applicators are not available, the mission planning system 702 may identify an alternative solution using three fertilizer applicators and a tender machine to periodically refill the applicators during the active operations.

In some embodiments, the initial machine fleet selection may be the closest selection of machines that are capable of performing the project. In other embodiments, the initial selection may be based on historical projects or input from the user. In some embodiments, the selection of a proposed machine fleet may begin with an initial fleet that is capable of meeting the project and modifying the fleet based on an analysis of alternative machines. The mission planning system 702 may replace an initial machine with an alternate machine for any number of reasons, including to protect the initial machine from wear and tear, to allow the initial machine to be available for another project, to include a more fuel-efficient machine or any other reason that favors exchanging one or more of the initial machines with an alternate machine to form the proposed fleet.

In box 1010, the mission planning system 702 analyzes the machine capabilities of the machine fleet and selects activity scripts for each machine based on the project request. The mission planning system 702 evaluates the capabilities of each machine in the fleet to identify the applicable capabilities of each machine for the project. The mission planning system 702 selects activity scripts from the activity program storage 706 according to the project request and the capabilities that each machine is facilitating. For example, an excavator may include capabilities for removing dirt for terra forming and removing rock obstacles. When the mission planning system 702 assigns projects for a fleet of machines including pan scrapers and excavators, the mission planning system 702 may assign one excavator the job to clear obstacles for the pan scrapers. The scripts assigned to that excavator may relate solely to the rock removal capabilities and not the dirt removal capabilities of the excavator. At the same time, other excavators in the fleet may be assigned dual operations for each type of capability.

The selected scripts may include initiation scripts for each machine which turn the machine on. In some embodiments, the initiation scripts may run automated diagnostics to ensure the machine is properly operating and its sensors and communication features are working to ensure safety in the automated operations. The selected scripts may be machine-specific languages for the machine's automation kit, which may differ across machines in the fleet.

In addition to the initiation scripts, the mission planning system 702 may select necessary operational scripts to achieve each desired operation for each machine. These may include the scripts for adjusting pan height for cutting a select grade, managing the movement speed consistent with expected ground conditions and other characteristics of the machine. Those skilled in the art will recognize that the various characteristics may be machine-specific options and vary by type of machine or make, model or specific machine capabilities.

In addition to selecting the appropriate scripts, the mission planning system 702 sets a path plan for each machine and/or the operational boundaries for the machine in box 1012. The mission planning system 702 may select whether a path plan, an operational boundary or both may be implemented based on the project and nature of the machine's automated capabilities.

In some embodiments, the mission planning system 702 may set a path plan for each machine to follow. The mission planning system 702 may set a path plan as a preferred solution in some embodiments. In other embodiments, one or more of the automated machines in the fleet may not be configured to self-determine a path when only operational boundaries are provided. The path plan may begin with a staging area and proceed through the expected operational path to a completion area. In some embodiments, the path plan may include optional additional routing to be determined with other machines in the fleet based on overall fleet progress. For example, for a fleet of two mowers, each machine may be assigned half of a field with the path plan including optional paths that overlap with the other machine's area. When the first machine finishes its half of the field, it may send a short-range communication to determine if the second machine is on schedule or behind schedule. If the second machine is sufficiently behind schedule, the first machine may complete an optional pass into the other area to speed up the overall completion time.

In some embodiments, the mission planning system 702 may use operational boundaries to define a complete area in which the machines may operate and move. For example, the operational boundaries may define static lines that the machine may not cross. These boundaries may or may not correspond to physical barriers in the area such as fences, ditches, walls or other physical barriers. In some embodiments, this area limits operation of the tool or accessory while allowing movement outside of the boundary while the tool or accessory is off. For example, a field may include a boundary section that operates as a break between crops. When plowing the field, the working machine may lift the plow to stop its operation while the machine turns within the boundary section of the field. In such applications, the mission planning system 702 may send an operational boundary and a machine boundary to differentiate movement limits from operation limits in the area.

In some embodiments, the mission planning system 702 may define the movement and operations using path plans and boundaries. For example, the machine may be provided a path plan to define movement of the machine and an operational boundary to define when the operation should begin and end throughout the path plan.

In box 1014, the mission planning system 702 sets triggers to initiate certain activities. For example, the mission planning system 702 may set the operational boundary as a trigger to start and stop machine operations. These triggers may initiate specific scripts to alter the standard operation when a trigger occurs, such as when an unanticipated obstacle is identified by the sensor system, another machine enters close proximity, a fuel level drops below a threshold, a goal for the machine is achieved or another event trigger occurs.

The mission planning system 702 may include several default trigger events and scripts for common operational matters, such as obstacle detection and avoidance, accessory engagement or disengagement, safety protocols, and other events. In addition, the mission planning system 702 may incorporate project specific triggers to initiate actions related to the specific underlying project. For example, the mission planning system 702 may include a refilling trigger for a fertilizer applicator to cause a refill request communication to be sent to a fleet tender machine when the onboard fertilizer falls below the threshold. In addition, the plan for the fertilizer applicator and tender machines may include proximity operation triggers to manage the refill interactions.

In box 1016, the mission planning system 702 generates a mission plan, which includes activities, path plans or boundaries, and triggers. The mission plan may be generated as a single plan for a plurality of machines in a fleet, whereby each machine conducts the operations within the mission plan assigned to that machine. In some embodiments, this collective mission plan may be sent as a single signal transmission to a fleet location to be received by each machine simultaneously.

In these embodiments, the mission plan may include several scripts that are used by different vehicles. For example, two landscaping vehicles having the same type of automation kit may use the same start-up sequence scripts. At the same time, another landscaping vehicle in the fleet may have a different automation kit using alternative language and scripts for the start-up sequence.

In addition to some efficiencies tied to consolidation, each machine's control unit may have improved awareness of other fleet vehicles' expected locations throughout the mission plan allowing for increased safety and operational efficiencies when assessing and reacting to obstacle sensor information. For example, if no other vehicle is supposed to be in the area and a sensor reading indicates a detected obstacle, the machine control unit may direct operations to obstacle-based operations instead of checking for an interactive machine signal. In addition, if a second machine is out of place or not where it is expected at that run-time, the first machine may send a notice to the cloud management system 602 to confirm the second machine is still operational and in communication with the cloud management system 602. The cloud management system 602 may then determine whether remedial action is needed to fix the second machine or update the mission plan for the fleet.

In some embodiments, the mission plan may be designed for a single machine, and each machine in the fleet receives a specific mission plan and does not receive the fleet level plan. In these embodiments, the transmission of each mission plan may be more efficient, though in some cases the overall fleet transmission efficiency may be reduced. Each machine may operate with less awareness of the rest of the fleet in this embodiment apart from specific interactive operations built into the machine's mission plan.

The structure of the mission plan may further be defined based upon the machine profile information for the fleet of machines. For example, certain automation kits may use a global mission plan for the machines, while others may use machine-specific plans. The mission planning system 702 may refer to the selected machines' machine profiles to provide compatible mission plans for each machine in the fleet. In some embodiments, this may require the mission planning system 702 to generate two corresponding mission plan formats for a fleet with mixed automation kit protocols. In some embodiments, a single global mission plan may be generated and then parsed, if needed, prior to sending the mission plan to a machine-specific system.

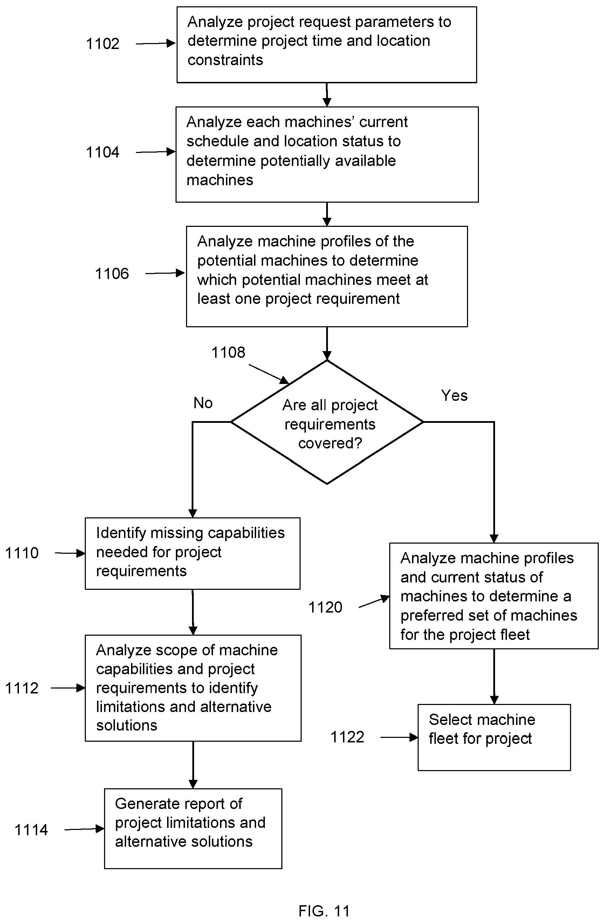

Figure 11 illustrates an embodiment of a machine fleet selection flow chart. As those skilled in the art will recognize, some steps may be optionally omitted or reordered. Alternatively, additional steps may be included during the machine fleet selection process. For example, the system may preliminarily only evaluate machines with a common type of automation kit, and only expand the evaluation if a complete fleet of machines cannot be identified.

In box 1102, the mission planning system 702 may analyze project request parameters to determine project time and location constraints. Those skilled in the art will know that additional project factors may be analyzed in addition to or instead of the time and location information discussed in this embodiment. For example, ownership or authorization information may be determined to limit the potential sources of machines.

These project request parameters may be received from the project request source 726 or through other cloud interface 604 entries. In some embodiments, the project time and location constraints may be directly provided in the project request. For example, the project request system may include a form or define necessary information to enter a request that includes a project time window and location.

In some embodiments, the project time and location constraints may be indirectly determined from the project request parameters by the mission planning system 702. For example, a person may submit a request for bailing hay over a summer on multiple fields. The mission planning system 702 may break down the request to identify time windows for cutting, raking and bailing in the middle of the summer and at the end of the summer based on historical growth information. The mission planning system 702 may further identify field groups and individual fields to be addressed independently. The mission planning system 702 may then define independent projects based on grouped fields and projected time windows for each activity. In some embodiments, the mission planning system 702 may further refine the timing based on relevant additional information, such as weather reports or pre-scheduled activities relating to the fields.

In box 1104, the mission planning system 702 may analyze each machines' current schedule and location status to determine a set of potentially available machines. In some embodiments, the mission planning system 702 may use the project timeframe determined in box 1102 to identify all machines that are not already scheduled for the project timeframe. In addition, the mission planning system 702 may use the project location to identify the machines in the vicinity of the project. Collectively, these two considerations identify a subset of machines that are available for the project and located in the relevant vicinity.

As those skilled in the art will recognize, the vicinity of the location may vary based on the project, the type of machine needed, and the number of potential machines included. For example, a terraforming project needing heavy equipment may provide a large vicinity to encompass enough potentially relevant machines. In some embodiments, a machine learning system may develop and implement relevant areas for consideration based on historical implementations and predictive analysis. For example, the machine learning system may determine that certain machines will be expected to ship to certain locations, which may provide a layered vicinity that confirms a type of machine is not nearby and identifies further locations with both machines and shipping capabilities, such as truck and trailer systems.

Once a selection of potentially available machines has been identified, the mission planning system 702 may analyze the machine profiles of the potentially available machines to determine which potential machines meet the project requirements, as provided in box 1106. As with the time and location constraints, the additional project requirements may be directly stated or indirectly determined from the project request. In some embodiments, the analysis may further evaluate available ancillary information impacting the underlying project goals. For example, if the project request identifies certain types of digging equipment needed to terraform a stock pond into a field, the mission planning system 702 may determine additional equipment for tree removal is needed based on available photography of the area.

During the analysis, the mission planning system 702 may select a series of machines that include at least one capability for achieving project requirements. In some embodiments, each machine may be relevant to one or more steps in the project. For example, the mission planning system 702 may identify one machine for plowing a field, another to plant and a third to fertilize. These three operations may meet the requirements for a crop planting project. In some embodiments, the mission planning system 702 may identify one or more redundant machines to cover the same project steps. This may allow an increased efficiency in completing the project and/or further preference analysis in selecting the fleet.

In addition, additional machines may be identified to cover ancillary operations, such as refueling, quality checks, monitoring or other operations. These additional machines may increase project efficiency and/or accuracy. For example, the mission planning system 702 may include an arial photography drone in the machine fleet to periodically conduct observations of the progress and accuracy of a planned terraforming project. As those skilled in the art will recognize, these ancillary operations may not be directly required by the project but may provide advantages in completing the project timely and accurately. In some embodiments, the ancillary operations may be indirect requirements for a project. For example, if it is necessary to keep machines operating in the field to complete a project within time constraints, the mission planning system 702 may identify a refueling machine as a requirement.

Once the available and applicable potential machines are identified, the mission planning system 702 determines if all project requirements are covered through the potential machines in decision box 1108. For example, the mission planning system 702 may compare the identified project requirements with the collective machine capabilities to identify any missing capabilities necessary for the project.

If any project requirements are not covered, the system identifies missing capabilities needed for the project requirements in box 1110. These missing capabilities may reflect complete project operations or subsidiary capabilities identified for the project requirements. For example, if an excavator is missing from an excavation project, the complete operational steps for the excavator may be missing. As another example, if a dirt transportation machine is missing, the project may be able to achieve the excavation requirements but not address the dirt transportation requirements as planned.

In box 1112, the mission planning system 702 may analyze the scope of machine capabilities and project requirements to identify limitations and alternative solutions. In some embodiments, the mission planning system 702 may evaluate the available capabilities of the machines and how alternative use of the machines' capabilities may achieve the project requirements. For example, if the project requirements called for mowing a large field with two mowing machines and a refueling machine, the mission planning system 702 may assign one or more additional mowing machines to compensate for a missing refueling machine. As another example, if the project called for an excavator to dig a large tank, the mission planning system 702 may redefine the requirements to fit a smaller backhoe loader and bulldozer working in tandem. In some embodiments, the alternative solutions may include options that are outside the existing available machines, such as identifying capable machines for rent in the area, identifying non-automated options for one or more capabilities, or other potential solutions.

In box 1114, the mission planning system 702 generates a report of project limitations and identifies alternative solutions. The report may be communicated to a user through a voice system, an email system, a messaging system, within an operations application or any other request for feedback system. In some embodiments, the report may include an option to authorize one of the alternative solutions, which will allow the mission planning system 702 to finalize a machine fleet and proceed with the mission planning process.

In some embodiments, the report of a lack of capable machines may complete the mission planning process or place it in hold for feedback from the user. For example, the report may indicate that the available machines are not capable of the project requirements and store a copy of the mission plan evaluation in a storage system for revisiting later. If the project request indicated a future operation date, the mission planning system 702 may automatically reassess the project closer to that time to determine if a new machine has become available to address missing capabilities.

In some embodiments, the user may review the report to determine new machine capabilities to seek in a rental or new machine. Once the user acquires a new machine or identifies relevant rental machines for inclusion in the analysis, the user may access the prior request and seek reassessment of the mission planning process to select a machine fleet.

If the project requirements are all covered by the capabilities of the potential machines, the process continues to box 1120, wherein the mission planning system 702 may analyze the machine profiles and current status of identified machines to determine a preferred set of machines for the project fleet. For example, the mission planning system 702 may determine that efficiency may be maximized through a certain combination of machine types. These machines may then be evaluated to determine the combination of machines that minimize the travel time to the staging area, whether the machines begin with sufficient fuel to maximize the project coverage (including any planned refueling interactions), whether they have well maintained equipment and other factors to further increase efficiency.

In some embodiments, other factors may be provided to tailor the preferences for a machine fleet. For example, a user request may identify one or more preferred machines to include in the fleet. The mission planning system 702 may then tailor the selection of other machines to complement the user provided machine selection.

As another example, the mission planning system 702 may consider upcoming maintenance schedules and maintenance needs to determine a preferred selection. In some embodiments, the mission planning system 702 may select a machine with upcoming maintenance because further wear and tear may be remediated during the subsequent maintenance. In other embodiments, the mission planning system 702 may avoid a machine with upcoming maintenance because of an increased error probability. Those skilled in the art may recognize that the purpose for maintenance may provide significant indications for this preference.

In box 1122, the machine fleet for the project is selected. In some embodiments, the proposed machine fleet selection may be submitted to a user through the cloud management system 602 to seek approval of the machine fleet before further mission planning occurs. In some embodiments, the machine fleet is automatically scheduled for the project when selected by the mission planning system 702. In some embodiments, the machine fleet may be temporarily placed on hold while a specific mission plan is developed by the mission planning system 702 along with any logistics needed for moving vehicles to the staging area.

Once the logistics are complete and accounted for by the mission planning system, the mission planning system may update the machines' schedules to reflect the required time for the project, the end location for the machine and any updated status information, such as anticipated fuel levels, wear and tear, maintenance needs or other status information anticipated by the project requirements. This schedule and anticipated information may be updated in a temporary section of the machine profile. This temporary information may be used by the mission planning system 702 when analyzing future project requests. Once the project is completed, the temporary information may be removed from the machine profile, which is updated with actual data based on the project results. In some embodiments, the temporary data may be moved to an analysis engine with the actual date to further develop the predictive results for future projects.

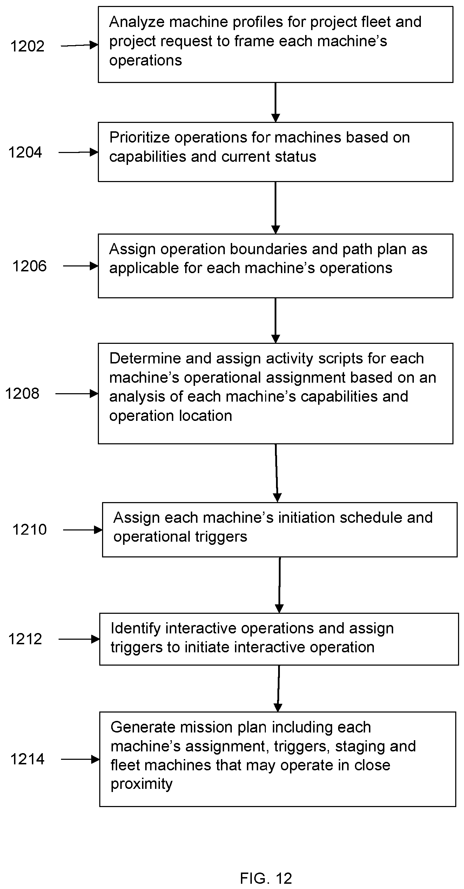

Figure 12 illustrates an embodiment of a mission planning process. In box 1202, the mission planning system 702 analyzes machine profiles for the project fleet and the project request to frame each machine's operations. In this embodiment, the mission planning system 702 may identify machine capabilities relevant to the overall project. The mission planning system 702 may also break down the overall project into operations that are achievable by the selected machines' collective capabilities. In some embodiments, the nature of the selected project operations may vary based on the collective machines' capabilities. For example, if a machine fleet includes a seed and fertilizer machine, the project may identify the requirement as a single operation. In contrast, if the machine fleet has separate machines for seeding and fertilizing, the project may require two operations for the same results.

During the operation framing stage, the mission planning system 702 may identify each machine's potential operations for the project. For example, the mission planning system 702 may identify a seeder machine and a fertilizer machine along with a pair of combination seeder/fertilizer machines for the seeding and fertilizing operations. Additional machines may be identified for operations relating to refueling and refilling seeds or fertilizer as needed for a project.

Those skilled in the art will recognize that the order of actions may vary or overlap with other process steps in some embodiments. For example, when analyzing machine profiles to identify machines, the mission planning system 702 may concurrently assign operations for the selected machines. This may avoid serially analyzing the same information in the machine profiles and increase computer efficiency.

In box 1204, the mission planning system 702 prioritizes operations for the machines based on capabilities and current status. In this stage, the different machines and combinations of machines may be prioritized to specific project operations. For example, a pair of combination seeder/fertilizer machines may be prioritized to fields or crops that are precision planted, while the complimentary seeder machine and fertilizer machine are sent to a project area with less precision expectations. The priority may be based on any number of factors, such as precision, efficiency, machine location, terrain capabilities, user indications or any other factor impacting preferred use between machines. For example, machines covering the needed capabilities for an operation may be prioritized based on proximity to a section or project field for the operation.

In box 1206, the mission planning system 702 may assign operation boundaries and path plan as applicable for each machine's operations. In some embodiments, the mission planning system 702 may assign one or more operational boundaries. These operational boundaries may define one or more areas within which the operation should occur. In some embodiments, the mission planning system 702 may assign an operational boundary and a border section, which may provide space for turning or moving without engaging in the defined operation.

In some embodiments, the mission planning system 702 may define a path plan instead of the operational boundaries. In other embodiments, the mission planning system 702 may develop a path plan to traverse the area within defined operational boundaries for the project. For example, the project may provide a select field for fertilizing using a plot of positioning data, such as GPS coordinates or other positioning coordinate systems. The mission planning system 702 may then develop a path plan within the field area's defined coordinates to ensure fertilizer coverage of the field.

In addition to providing the operational boundaries or a path plan, the mission planning system 702 may develop a travel and staging plan to direct the machines to the operational area from a starting location. For example, the machines may be sent from a storage building to a staging area at the selected field for operation. The machines may be provided with a set path to follow, such as a roadway, paved path or other path, to reach the staging area before the operational steps proceed. In some embodiments, this set travel path may include intermediary paths, such as path between a first operational field and a second operational field.

In some embodiments, the mission planning system 702 may only provide operational boundaries with instructions to facilitate an interaction when needed or called for by a machine. For example, a refueling machine may be provided with instructions to await a fuel request from a first machine and then travel to a meeting point in the operational boundaries for the project, which is provided by the first machine with the request.

In box 1208, the mission planning system 702 determines mission activity scripts for each machine's operational assignment based on an analysis of each machine's capabilities and operation location. In some embodiments, the mission planning system 702 will assign scripts to a machine based on that machine's automation system and operational language, the assigned operations, necessary capabilities, patterns and other necessary scripts to achieve the operations. In addition to operational scripts, the mission planning system 702 includes scripts needed to facilitate getting the machine to the staging area. If the machine cannot be automatically sent to the staging area, logistical arrangements may be scheduled to ensure the machines are available at the staging area at the scheduled time for the project.

The scripts may include machine startup procedures, drive controls with speed and heading from the staging area and along the path plan, operation controls and speed requirements or limits, completion and shut down scripts, and additional scripts for the project. These scripts may be selected from or created based on those stored in the activity program storage 724. The mission planning system 702 may select the script language and provide project information based on each machine's automation system.

In box 1210, the mission planning system 702 further assigns each machine's initiation schedule and operational triggers. The initiation schedule may define each machine's startup timing and project execution start schedule. In some embodiments, the start schedule is set by a time or a relative clocking system. In other embodiments, the initiation schedule may be assigned to the first machine and each additional machine initiation is timed from the first machine's actual initiation. In such embodiments, a modified start time only needs to be applied to the first vehicle to manage the system start.

In addition to the initiation schedule, operational triggers may also be set by the mission planning system 702. Operational triggers may include different aspects of the path plan, interactions, sensor readings or other information. In some embodiments, the operational triggers may be tied to specific actions within the mission plan.

For example, the mission plan may define a geographic boundary for mowing a field, while the path plan takes the machine outside the boundary for turning around or other actions. The geographic boundary may serve as an operational trigger, wherein the machine follows the path plan and monitors for the boundary. When the machine determines that it is crossing the boundary into the mowing area, the machine engages the blades to cut the field. When the machine determines that it is leaving the mowing area boundary, the machine disengages the blades to stop cutting.

As another example, machines may include obstacle detection sensors that act as operational triggers. If an obstacle is detected, the operational trigger will cause the machine to enter an obstacle avoidance operation. This may be an alternative form of operation. For example, the machine may facilitate specific obstacle detection evaluations to determine a type of obstacle, such as a stationary obstacle, a moving obstacle, a potential danger (e.g., elevated heat, chemical releases, etc.) or other obstacle. This may be through alternative scripts for sensor activities and an evaluation by the onboard electronic control unit to identify the type of obstacle. Once the obstacle is determined, the machine's movement may be modified to redirect the machine around an obstacle or away from an obstacle. The machine's alternative operations may address the specific obstacle identified. For example, if the machine detects a moving obstacle, the machine may use sensors to determinethe direction of travel. If the obstacle will not collide with the machine, it may stop movement until the path is clear to continue. If the obstacle is on a collision course, the machine will evade the collision based on the obstacle's direction of travel.

In box 1212, the mission planning system 702 identifies interactive operations and assigns triggers to initiate the interactive operations. In some embodiments, the interactive operations may be a necessary feature of the mission plan. For example, terraforming project may require an excavator and a series of dirt haulers to interact regularly. In such embodiments, the mission planning system 702 may set a trigger for the interaction in the excavator's mission plan based on the active work location and a received communication signal from one of the dirt haulers. The excavator may modify the current operation to an operation to move the dirt into the dirt hauler. In some embodiments, the current operation may be another interactive operation. For example, the excavator may use a trigger to transition from loading a first dirt hauler to loading a second dirt hauler. In some embodiments, the trigger may require multiple steps. For example, a transition from the first to the second dirt hauler may require a trigger signal from the first dirt hauler that it is full and a signal from the second dirt hauler that it is in position.

In some embodiments, the interactive operations may be potential interactions identified by the mission planning system 702, but not required by the mission plan. For example, the mission plan may assign field shredding operations to a fleet of machines and include a refueling machine in the plan on an as needed basis only. If one or more shredding machines reach a low fuel threshold, the cloud management system 602 may send an initiation signal to the refueling machine to enter the field and meet the machines with low fuel. The shredding machines with low fuel may be assigned an interactive trigger to let the shredding machine know a refueling machine is present and to enter the interactive operations and protocols.

In some embodiments, the obstacle detection sensors may operate in tandem with direct short range communication systems to identify a nearby machine for an interactive operation. The detection of a nearby machine and receipt of a communication having a proper identification may be a trigger to enter an interactive operation.

In box 1214, the mission planning system 702 generates a mission plan including each machine's assignment, triggers, and staging, and identifying fleet machines that may operate in close proximity. In some embodiments, the generated mission plan may be ready for deployment to the machine fleet for the project. Once the mission plan is generated, it may be automatically sent from the mission planning system 702 to the machine fleet via a network communication card in the cloud management system 602, such as a cellular chip, an Internet connection to a wireless transmitter or wired connection local to the machines in the fleet. For example, the cloud management system 602 may send a transmission to a wireless local area network at the storage or staging location for the working machines 716 and 718. The wireless local area network may transmit the mission plan to each of the working machines 716 and 718.

In some embodiments, the mission plan may include distinct plan assignments for each machine that are packaged separately for the machines. For example, the generated mission plan may assign a first package for the working machine 716 and a second package for the working machine 718. Each package may be less than the entire mission plan in some embodiments. As an example, the first package may include active detailed information and scripting for the first machine 716. The first package may also include overarching operation information for the second machine 718 without the detail or scripting that is unnecessary or irrelevant to the first machine 716's activities.

Those skilled in the art will recognize that the type of project and machine may impact the level of additional information related to the second machine 718's operations. For instance, if the machines 716 and 718 are the same, additional information and potential scripting may be included as a contingency for the first machine 716 having to extend its operation to cover for the second machine 718. Alternatively, if the machines 716 and 718 are distinct, providing detailed information and scripts may not be worthwhile because the first machine 716 cannot perform the activities.

In some embodiments, the entire mission plan may be included in each separate package, while the machine-specific plan is tailored distinctly for each machine. For example, the mission planning system 702 may generate a mission plan with machine-specific packages tailored to each machine's operational capabilities, onboard control system languages and components, timing patterns, path processes and other features. In some embodiments, the common mission plan generated by the mission planning system 702 may pass through an outgoing communication interface for the specific machine control system for each working machine 716 and 718. The communication interface may translate the standard format mission plan into a machine-specific (or control system specific) format and language prior to transmission.

In some embodiments, the mission plan may be generated and stored in an active project database until a scheduled distribution time prior to the mission plan's start schedule. In such embodiments, the mission plan may include a distribution trigger to cause the cloud management system 602 to transmit the mission plan to the machine fleet at a select time or when a select event occurs. In such embodiments, the cloud management system 602 may transmit schedule information or staging and preparedness instructions to the machine fleet, local machine coordination system, the machine users, project requester or other entity to ensure the machine fleet is available and ready when the project is initiated.

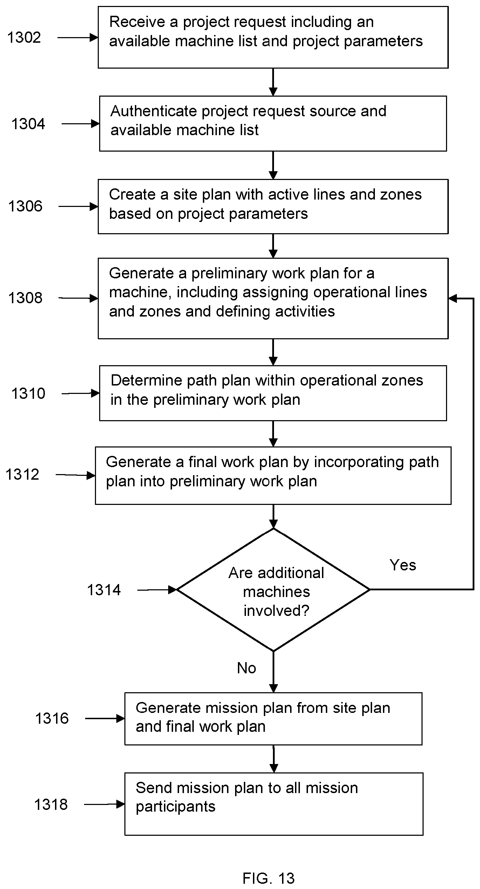

Figure 13 illustrates another embodiment of a mission planning process. In box 1302, the cloud management system 602 receives a project request, including an available machine list and project parameters. The cloud management system 602 may receive the project request via the project request source 726 from any authorized system participant, such as a project manager, a private owner, any entity owning or renting applicable machines or any other user. The user may provide or select machines they are authorized to assign to form an available machine list. In some embodiments, the user may also have the option to select whether rental machines may be included to address missing capabilities in the already authorized machines.

The project parameters may also be received from the project request source 726. In some embodiments, the project time and location constraints may be directly provided in the project request. The project time and location constraints may be indirectly determined from the project request parameters by the mission planning system 702 in some embodiments. The project parameters may also include geographic boundaries, accessible paths to the working location, detailed requirements and limitations for the operation or result, and other information.

In some embodiments, the project request source 726 may facilitate a form or define necessary information to enter a request that includes project parameters and available machines. In some embodiments, the geographic boundary may be dynamically selected on a map or other visual display selected by the user. For example, a user may select a map view of the location and select specific areas for operation. These may be identified in detail (e.g., GPS boundaries, relational boundaries or other formats) by the user or through an analysis of the user's selection by the mission planning system 702 as part of the site plan analysis.

In some embodiments, the project request may include authentication information. For example, the system may require a user to provide a profile name and password associated with an authorized account and associated machines. As another example, the project request submission may require digital recognition information such as a request originating from an approved phone number or IP address. In some embodiments, multiple forms of authentication may be required.

Once the form or other request format is completed and received, the cloud management system 602 authenticates the project request source 726 and available machine list in box 1304. In some embodiments, this authentication may use authentication information received with the project request. This received authentication information may be compared to account authorization information and vehicle authorization information to ensure the received information properly corresponds.

In some embodiments, the authenticity of a project request may be verified through a multipart verification process. For example, the cloud management system 602 may request a username and password when the project request is submitted. The cloud management system 602 may receive the username and password along with the phone number or IP address associated with the user's device. The cloud management system 602 may then check authorized account records to identify an account associated with the username. Once an account associated with the username is identified, the cloud management system 602 may verify the password through a comparison process, which may use encrypted versions of the stored password and received password. If the password is verified, the authentication system may also confirm that the device identifier (phone number, IP address, etc.) corresponds to an authorized source. In some embodiments, a second step authentication may be used as well. For example, the cloud management system 602 may send an approval notice to another email or contact source in the cloud management system 602 account.

The initial authentication may be used for all access for the user within the cloud management system 602 in some embodiments. In other embodiments, additional verification steps may be required for confirming the available machine list. The machine authentication may rely on the same type of authentication or require an alternative authentication option as well. For example, the authorized users may be required to store a secure key and authenticator application for each machine.

If the authentication process indicates that the project request is not from an authorized user, device or otherwise, the cloud management system 602 may provide a new account set up option and provide information or forms for setting up the account. If the account is seeking use of preexisting machines or association with an existing account, the cloud management system 602 may send an approval request with the new user's information to an existing account or machine manager.

The cloud management system 602 information request for new users may include a machine registration option and authorization. For example, a user may be requested to identify a machine and provide detailed information. In some embodiments, the serial number or a code may be provided with a purchase order to identify the machine and the authorization for the cloud management system 602 to setup or download a machine profile from the prior owner or manufacturer.

If the account and machine list are authenticated for the project request, the cloud management system 602 may initiate the mission planning process within the mission planning system 702. In box 1306, the mission planning system 702 creates a site plan with active lines and zones based on the project parameters. In some embodiments, the site plan may be primarily laid out in the project request, wherein the mission planning system 702 may conduct conversions to operational definitions for machines. For example, the project request may provide outlines on a map for the site plan and the mission planning system 702 may convert the outlines to GPS parameters for the mission planning system 702 and machines to use.

In some embodiments, general location information may be provided for identifying an area, which may be evaluated by the mission planning system 702 to determine the site plan. For example, a user may circle a selection of holes from tee to green for a mowing and fertilizing project on a golf course. The mission planning system 702 may determine the GPS boundaries of each hole from tee to green and separately identify boundaries for the green, which may have alternative requirements than the fairway. In addition, the mission planning system 702 may receive machine locations and identify available transition paths from the machine location to one or more staging areas adjacent to the site plan.

The mission planning system 702 may also develop site plans based on alternative selection options. For example, a user may identify a field using road markers and an owner name. The mission planning system 702 may confirm the location and owner through tax records and pull the plot for the site plan development. Arial images, such as Google map images or drone images, may be analyzed by the system to identify boundary items, such as fences, roads, plot lines or other boundaries, and visual obstacles, such as trees, ponds, large rocks and other apparent obstacles. Once this framework is determined, the mission planning system 702 may create a site plan accounting for all boundaries and anticipated obstacles.

In some embodiments, the cloud management system 602 may store previously identified site plans. For example, the developed site plans may be part of a project history storage system. When a project is received and authenticated, the mission planning system 702 may compare project information and location information to previous projects and locations to see if the same project or location has been utilized before. If the same project is stored, the mission planning system 702 may seek confirmation from the user to use the prior mission plan. If the location has been used previously, the mission planning system 702 may pull any previously developed site plans for the location and send the site plans to the user to select the appropriate site plan for the current project. In other embodiments, the mission planning system 702 may evaluate the prior site plans to determine the appropriate site plan for the current project.

In some embodiments, the site plan may provide an overall project area and access avenues independent of specific machine operations or assignments. The site plan may be used as the backdrop for machine specific operation assignments for the mission plan.

In box 1308, the mission planning system 702 generates a preliminary work plan for a machine, including assigning operational lines and zones and defining activities. The preliminary work plan may be built using the site map boundaries and available avenues for machine movements. The preliminary work may be configured to operate in a specific section of the site map based on the machine's starting location and staging area. If multiple machines will be used for common activities, the mission planning system 702 may create preliminary partitions to define the specific sections of the site map for each machine's work plan.

The work plan may also incorporate interaction between machines. For example, a work plan for a mower may include instructions for an interactive refueling with refueling machine at a secondary staging location.

In some embodiments, the work plan defines active operational areas, wherein the machine performs an active operation separate from movement to the next location. As an example, an active operation may be mowing a field, fertilizing crops, delivering concrete into a frame, or other action. The machine may be required to make repeated travels across inactive spaces to reengage in an activity. For example, when planting crops, a machine may conclude a planting pass and disengage the planter while turning to align for a second planting pass.

These operational zones or lines may also be used to trigger alternative operations. For example, a fertilizer may actively fertilize as a primary action and when crossing into a refill operation zone, the fertilizer may adjust movement and conduct interactive communications to receive a refill of fertilizer from a second tendering machine.

In box 1310, the mission planning system 702 determines the machine's path plan within operational zones in the preliminary work plan. In this embodiment, the mission planning system 702 determines a vehicle path plan covering the operational zones assigned to the machine in the preliminary work plan and manages the path plan's scope within the overall site plan. For example, the path plan may begin from the staging area and define a travel line that proceeds back and forth over the operational zone for the machine in multiple parallel or approximately parallel paths until that machine's operational zone is completed. In some embodiments, the machine may be assigned to additional zones that are connected by travel paths within the path plan. In addition, staging areas, interactive areas and other defined areas within the path plan may be flagged. For example, a mowing machine that is covering a series of fairways may pause at a staging area between two fairways to wait on a refueling machine interaction before proceeding on the path.

In some embodiments, the path plan may include a transition path from the storage area to a staging area adjacent to the operational zone. Similarly, some embodiments may include a conclusion step on the path plan to return the machine to a storage area or other area in preparation for another project.

Some embodiments may analyze the machine profile to determine spacing for each pass and define the paths according to the necessary spacing for the machine. For example, the mission planning system 702 may use the cutting width to determine pass separation for determining the path plan. As another example, the mission planning system 702 may use a spray pattern width for a liquid fertilizer applicator to ensure appropriate fertilizer coverage across the passes for determining the path plan spacing.

In some embodiments, the path plan may not be a serpentine or parallel path design. For example, the mission planning system may use a spiraled design either expanding from the center or contracting to a center. As another example, an abstract pattern may be formed to efficiently address obstacles. The path plan may also account for passes made by other machines. The path plans may also create abstract patterns to adjust passes for natural barriers, topographies, field management, water management, potential machine risks and/or field characteristics.

In some embodiments, the generation of a preliminary work plan may include the creation of a machine's path plan. In such embodiments, the mission planning system 702 may create a path plan for a defined work area before or after the specific operations for the work area are defined.

These steps may also be processed concurrently, in some embodiments, and overlaid when completed. For example, the cloud management system 602 may include parallel processing paths or processing systems that are available for assignment by the mission planning system 702. In some embodiments, these processing systems may be networked computer systems, servers or other components that are customized for specific analysis features. For example, one server processing system may include specialized hardware, software and/or firmware tailored to define path plans from geographic data points and map constraints. The system may further require basic operation information, such as application width for the device, to define separation patterns for spacing within the path plan. This system may select and build a script pattern to follow the selected path plan. A second processing system may be tailored to define trigger zones and boundaries for script transitions during operation. This second processing system may associate operational scripts and transition scripts with specific geographic boundaries. These processing systems may therefore be more efficient than a consolidated system or serialized system. Those skilled in the art will recognize that the parallel processing options may be varied by project needs and efficiency thresholds. In addition, additional processing systems may be employed for redundancy and quality assurance checks.

In box 1312, the mission planning system 702 generates a final work plan by incorporating the path plan into the preliminary work plan. As discussed above, this step may be accomplished as part of a parallel processing system or integrated processing system that creates the work plan and path plan in tandem. The generation of the final work plan for the machine may provide a formal step to transition a stored script and information for a machine, which may subsequently be part of a mission plan to achieve the overall project. This final work plan may be maintained in temporary storage in some embodiments. The final work plan may alternatively or simultaneously be stored in a work plan repository that may be used in subsequent project planning evaluations and development.

As an example of generating a final work plan, the mission planning system 702 may use a third processing system to compile and align scripts for path planning operations and activity operations to form a complete script for the machine operations. In some embodiments, the various features of the machine operations may be received as partial scripts from separate processing systems prior to compilation. In some embodiments, the final work plan may incorporate additional scripts for machine initiation processes, system check processes, trigger management scripts and other information for the machine's operations.

In box 1314, the mission planning system 702 checks if additional machines are involved in the project. If so, the process repeats the steps in boxes 1308 through 1312 to develop a final work plan for the next machine. This process may continue until the last machine is assigned a final work plan.

In alternative embodiments, the development of final work plans may be processed simultaneously. For example, the mission planning system 702 may identify all machines for the project and assign parallel processing options to complete steps provided in boxes 1308 through 1312 in tandem. In such an embodiment, the final check may confirm that all final work plans are completed for each machine in the project fleet.

Those skilled in the art will recognize that a mission planning system 702 may employ both parallel and serial processing options depending on the circumstances and attendant efficiencies. For example, a fleet of mowing machines may be processed in parallel to a final work plan, while a refueling machine in the fleet is processed serially behind the mowing machines in order to receive refueling marks and timing from each mowing machine work plan.

Once all machines have been assigned a final work plan, the process proceeds to generating a mission plan from the site plan and final work plans in box 1316. The mission planning system 702 consolidates and compiles the final work plans and the overall site plan into a mission plan covering the complete project. During this step, the mission planning system 702 may conduct a quality assurance assessment to confirm that the work plans are all within the permissible site plan, and that travel avenues allow for machines to access staging areas and move between separate work areas of the site plan.

As with other embodiments, generating the mission plan may result in a single complete plan for the cloud management system 602 and a package of machine-specific plans for each machine to use during the project. In some embodiments, the mission plan may include any staging requirements for the project requestor or machine provider. For example, the mission plan may include a schedule and instructions for the machine provider to ensure the machine is at a starting point or staging area by the project start time. Similarly, the mission plan may provide a notification for when the project should be completed and the location of a machine to be picked up by an owner or user. For locally stored machines, this aspect of logistics may not be necessary. Those skilled in the art will recognize that logistical notifications may relate to any number of operational guidance, such as confirming maintenance timing, prefilling fuel tanks, attaching any accessory items or other preparatory work to ensure the machines are staged and ready for operation at the project start.

In box 1318, the cloud management system 602 sends the mission plan to all mission participants. The mission participants may include the selected machine fleet, an operation's hub or center, the project manager, machine handlers and others that may be involved in staging, operation or oversight for the project. In addition, the project request may include a list of non-machine mission participants.

As discussed with other embodiments, the mission plan sent to each machine may be the complete mission plan or a modified version of the mission plan tailored for each machine. In some embodiments, the mission plan is sent automatically after it is generated. Other embodiments facilitate a timed deployment of the mission plan to each machine. In yet other embodiments, the deployment of the mission plans to machines may include a staggered transmission process.

In some embodiments, the cloud management system 602 may streamline the transmission process to improve transmission efficiency and manage bandwidth considerations. For example, the cloud management system 602 may break the mission plan into smaller packets and send a stream of the packets over a dispersed time for a remote machine using a slower communication system. As another example, the cloud management system 602 may facilitate a near real-time transmission for a machine operating in a high-speed coverage area.

In some embodiments, the cloud management system 602 may send the entire mission plan to a hub local to the machine if it is directly connected to a high-speed transmission channel. The hub may then use a local communication system, which may be wired or wireless, to relay the mission plan to the machine. For example, the local hub may use the direct short-range communication system built into a machine's dual communication component for high-speed interactive communications.

In some embodiments, the cloud management system 602 may send a scheduling notification to the mission participants for future planned projects. The scheduling notification may also identify the timing for transmission of the mission plan and confirm signal quality and location.

Most of the equipment discussed above comprises hardware and associated software. For example, the typical working machine is likely to include one or more processors and software executable on those processors to carry out the operations described. We use the term software herein in its commonly understood sense to refer to programs or routines (subroutines, objects, plug-ins, etc.), as well as data, usable by a machine or processor. As is well known, computer programs generally comprise instructions that are stored in machine-readable or computer-readable storage media. Some embodiments of the present invention may include executable programs or instructions that are stored in machine-readable or computer-readable storage media, such as a digital memory. We do not imply that a "computer" in the conventional sense is required in any particular embodiment. For example, various processors, embedded or otherwise, may be used in equipment such as the components described herein.

Memory for storing software again is well known. In some embodiments, memory associated with a given processor may be stored in the same physical device as the processor ("on-board" memory); for example, RAM or FLASH memory disposed within an integrated circuit microprocessor or the like. In other examples, the memory comprises an independent device, such as an external disk drive, storage array, or portable FLASH key fob. In such cases, the memory becomes "associated" with the digital processor when the two are operatively coupled together, or in communication with each other, for example by an I/O port, network connection, etc. such that the processor can read a file stored on the memory. Associated memory may be "read only" by design (ROM) or by virtue of permission settings, or not. Other examples include but are not limited to WORM, EPROM, EEPROM, FLASH, etc. Those technologies often are implemented in solid state semiconductor devices. Other memories may comprise moving parts, such as a conventional rotating disk drive. All such memories are "machine readable" or "computer-readable" and may be used to store executable instructions for implementing the functions described herein.

A "software product" refers to a memory device in which a series of executable instructions are stored in a machine-readable form so that a suitable machine or processor, with appropriate access to the software product, can execute the instructions to carry out a process implemented by the instructions. Software products are sometimes used to distribute software. Any type of machine-readable memory, including without limitation those summarized above, may be used to make a software product. That said, it is also known that software can be distributed via electronic transmission ("download"), in which case there typically will be a corresponding software product at the transmitting end of the transmission, or the receiving end, or both.

## Claims

1. A management system (118) for a plurality of working machines (102, 104, 106; 606, 608; 716, 718) to coordinate automated interactive operations, comprising:
a networked server system, comprising:
a server communication card configured to communicate over a communication network (130, 242),
a server memory drive (704, 706), and
a server controller (602) operatively connected to the server communication card and the server memory drive (704, 706), the server controller (602) is configured to manage the server memory drive (704, 706) and communication over the server communication card;
a first automated working machine (102, 104; 606; 716), comprising:
a first application gateway (210, 230) having a first communication card configured to communicate over the communication network (130, 242) with the server communication card,
a first machine control unit (214) comprising a first processor and a first memory, which stores first machine characteristic information and first machine operations,
a first machine actuator system (218) having a first machine control actuator, and
a first automation sensor (216);
a second automated working machine (106; 608; 718), comprising:
a second application gateway (210, 230) having a second communication card configured to communicate over the communication network (130, 242) with the server communication card,
a second machine control unit (214) comprising a second processor and a second memory, which stores second machine characteristic information and second machine operations,
a second machine actuator system (218) having a second machine control actuator, and
a second automation sensor (216); and
wherein the first automated working machine (102, 104; 606; 716) sends the first machine characteristics via the first communication card to the server communication card of the networked server system;
wherein the server controller (602) analyzes the first machine characteristics to determine attributes of the first automated working machine (102, 104; 606; 716) and creates a first machine profile, wherein the first machine profile is created by the server controller (602) converting the first machine characteristics into a standard framework for a mission planning system of the networked server;
wherein the mission planning system generates a mission plan for the plurality of automated working machines (102, 104, 106; 606, 608; 716, 718), which include the first automated working machine (102, 104; 606; 716) and the second automated working machine (106; 608; 718), using the standard framework, and wherein the mission plan includes operation instructions for the first automated working machine (102, 104; 606; 716) and the second automated working machine (106; 608; 718);
wherein the server controller (602) translates the operation instructions for the first automated working machine (102, 104; 606; 716) from the standard framework into the first automated machine operations and translates the operation instructions for the second automated working machine (106; 608; 718) from the standard framework into the second machine operations, wherein the first machine operations and the second machine operations are not compatible frameworks.

2. The management system (118) according to claim 1, wherein the first automated working machine (102, 104; 606; 716) further comprises an obstacle safety system to keep the first automated working machine (102, 104; 606; 716) a safe distance from a detected obstacle, wherein the first machine control unit (214) manages the operations of the first automated working machine (102, 104; 606; 716) to maintain the safe distance from the detected obstacle.

3. The management system (118) according to claim 1, wherein the first communication card is further configured to communicate over a short-range communication network (132), which is different from the communication network (130, 242).

4. The management system (118) according to claim 2, wherein the first machine control unit (214) controls the first automated working machine (102, 104; 606; 716) to interact with the second automated working machine (106; 608; 718) within the distance based on a real-time information exchange with the second automated working machine (106; 608; 718) over the short-range communication network (132).

5. The management system (118) according to claim 4, wherein the mission plan instructs the first machine control unit (214) to interact with the second automated working machine (106; 608; 718), and the first machine control unit (214) uses the real-time information exchange to manage the interaction.

6. The management system (118) according to claim 3, wherein the first communication card is further configured to communicate over an intermediate-range communication network, which is different from the communication network (130, 242) and the short-range communication network (132), and wherein the intermediate-range communication network operates on a lower bandwidth than the communication network (130, 242) and the short-range communication network (132).

7. The management system (118) according to claim 1, wherein the mission plan instructs the first machine control unit (214) to interact with a plurality of automated working machines (102, 104, 106; 606, 608; 716, 718) using real-time information from each of the plurality of automated working machines (102, 104, 106; 606, 608; 716, 718).

## Patentansprüche

1. Verwaltungssystem (118) für eine Vielzahl von Arbeitsmaschinen (102, 104, 106; 606, 608; 716, 718), um automatisierte interaktive Vorgänge zu koordinieren, umfassend:
ein vernetztes Serversystem, umfassend:
eine Serverkommunikationskarte, die konfiguriert ist, um über ein Kommunikationsnetz (130, 242) zu kommunizieren,
ein Serverspeicherlaufwerk (704, 706) und
eine Serversteuerung (602), die mit der Serverkommunikationskarte und dem Serverspeicherlaufwerk (704, 706) wirkverbunden ist, wobei die Serversteuerung (602) konfiguriert ist, um das Serverspeicherlaufwerk (704, 706) und eine Kommunikation über die Serverkommunikationskarte zu verwalten;
eine erste automatisierte Arbeitsmaschine (102, 104; 606; 716), umfassend:
ein erstes Anwendungsgateway (210, 230), das eine erste Kommunikationskarte aufweist, die konfiguriert ist, um über das Kommunikationsnetz (130, 242) mit der Serverkommunikationskarte zu kommunizieren,
eine Steuereinheit (214) einer ersten Maschine, umfassend einen ersten Prozessor und einen ersten Speicher, der Eigenschaftsinformationen der ersten Maschine und Vorgänge der ersten Maschine speichert,
ein Aktuatorsystem (218) der ersten Maschine, das einen Steueraktuator der ersten Maschine aufweist, und
einen ersten Automatisierungssensor (216);
eine zweite automatisierte Arbeitsmaschine (106; 608; 718), umfassend:
ein zweites Anwendungsgateway (210, 230), das eine zweite Kommunikationskarte aufweist, die konfiguriert ist, um über das Kommunikationsnetz (130, 242) mit der Serverkommunikationskarte zu kommunizieren,
eine Steuereinheit (214) einer zweiten Maschine, umfassend einen zweiten Prozessor und einen zweiten Speicher, der Eigenschaftsinformationen der zweiten Maschine und Vorgänge der zweiten Maschine speichert,
ein Aktuatorsystem (218) der zweiten Maschine, das einen Steueraktuator der zweiten Maschine aufweist, und
einen zweiten Automatisierungssensor (216); und
wobei die erste automatisierte Arbeitsmaschine (102, 104; 606; 716) die Eigenschaften der ersten Maschine mittels der ersten Kommunikationskarte an die Serverkommunikationskarte des vernetzten Serversystems sendet;
wobei die Serversteuerung (602) die Eigenschaften der ersten Maschine analysiert, um Attribute der ersten automatisierten Arbeitsmaschine (102, 104, 606, 716) zu bestimmen, und ein Profil der ersten Maschine erstellt, wobei das Profil der ersten Maschine dadurch erstellt wird, dass die Serversteuerung (602) die Eigenschaften der ersten Maschine in ein Standardgerüst für ein Auftragsplanungssystem des vernetzten Servers umwandelt;
wobei das Auftragsplanungssystem, unter Verwendung des Standardgerüsts, einen Auftragsplan für die Vielzahl von automatisierten Arbeitsmaschinen (102, 104, 106; 606, 608; 716, 718), die die erste automatisierte Arbeitsmaschine (102, 104; 606; 716) und die zweite automatisierte Arbeitsmaschine (106; 608; 718) einschließen, generiert und wobei der Auftragsplan Betriebsanweisungen für die erste automatisierte Arbeitsmaschine (102, 104; 606; 716) und die zweite automatisierte Arbeitsmaschine (106; 608; 718) einschließt;
wobei die Serversteuerung (602) die Betriebsanweisungen für die erste automatisierte Arbeitsmaschine (102, 104, 606, 716) von dem Standardgerüst in die Vorgänge einer ersten automatisierten Maschine übersetzt und die Betriebsanweisungen für die zweite automatisierte Arbeitsmaschine (106, 608, 718) von dem Standardgerüst in die Vorgänge der zweiten Maschine übersetzt, wobei die Vorgänge der ersten Maschine und die Vorgänge der zweiten Maschine nicht kompatible Gerüste sind.

2. Verwaltungssystem (118) nach Anspruch 1, wobei die erste automatisierte Arbeitsmaschine (102, 104, 606, 716) ferner ein Hindernissicherheitssystem umfasst, um die erste automatisierte Arbeitsmaschine (102, 104, 606, 716) in einem sicheren Abstand von einem erkannten Hindernis zu halten, wobei die Steuereinheit (214) der ersten Maschine die Vorgänge der ersten automatisierten Arbeitsmaschine (102, 104, 606, 716) steuert, um den sicheren Abstand von dem erkannten Hindernis aufrechtzuerhalten.

3. Verwaltungssystem (118) nach Anspruch 1, wobei die erste Kommunikationskarte ferner konfiguriert ist, um über ein Kurzstreckenkommunikationsnetz (132) zu kommunizieren, das sich von dem Kommunikationsnetz (130, 242) unterscheidet.

4. Verwaltungssystem (118) nach Anspruch 2, wobei die Steuereinheit (214) der ersten Maschine die erste automatisierte Arbeitsmaschine (102, 104, 606, 716) steuert, um mit der zweiten automatisierten Arbeitsmaschine (106, 608, 718) innerhalb des Abstands basierend auf einem Echtzeitinformationsaustauschs mit der zweiten automatisierten Arbeitsmaschine (106, 608, 718) über das Kurzstreckenkommunikationsnetz (132) zu interagieren.

5. Verwaltungssystem (118) nach Anspruch 4, wobei der Auftragsplan die Steuereinheit (214) der ersten Maschine anweist, mit der zweiten automatisierten Arbeitsmaschine (106; 608; 718) zu interagieren, und die Steuereinheit (214) der ersten Maschine den Echtzeitinformationsaustausch verwendet, um die Interaktion zu verwalten.

6. Verwaltungssystem (118) nach Anspruch 3, wobei die erste Kommunikationskarte ferner konfiguriert ist, um über ein Mittelstreckenkommunikationsnetz zu kommunizieren, das sich von dem Kommunikationsnetz (130, 242) und dem Kurzstreckenkommunikationsnetz (132) unterscheidet, und wobei das Mittelstreckenkommunikationsnetz mit einer geringeren Bandbreite als das Kommunikationsnetz (130, 242) und das Kurzstreckenkommunikationsnetz (132) in Betrieb ist.

7. Verwaltungssystem (118) nach Anspruch 1, wobei der Auftragsplan die Steuereinheit (214) der ersten Maschine anweist, mit einer Vielzahl von automatisierten Arbeitsmaschinen (102, 104, 106; 606, 608; 716, 718) unter Verwendung von Echtzeitinformationen von jeder der Vielzahl von automatisierten Arbeitsmaschinen (102, 104, 106; 606, 608; 716, 718) zu interagieren.

## Revendications

1. Système de gestion (118) pour une pluralité de machines de travail (102, 104, 106 ; 606, 608 ; 716, 718) afin de coordonner des opérations interactives automatisées, comprenant :
un système de serveur en réseau, comprenant :
une carte de communication serveur configurée pour communiquer sur un réseau de communication (130, 242),
un lecteur de mémoire de serveur (704, 706), et
un dispositif de commande de serveur (602) connecté de manière opérationnelle à la carte de communication de serveur et au lecteur de mémoire de serveur (704, 706), le dispositif de commande de serveur (602) est configuré pour gérer le lecteur de mémoire de serveur (704, 706) et la communication par l'intermédiaire de la carte de communication de serveur ;
une première machine de travail automatisée (102, 104 ; 606 ; 716), comprenant :
une première passerelle d'application (210, 230) dotée d'une première carte de communication configurée pour communiquer sur le réseau de communication (130, 242) avec la carte de communication du serveur,
une première unité de commande de machine (214) comprenant un premier processeur et une première mémoire, qui stocke les informations de caractéristiques de première machine et les opérations de première machine,
un premier système d'actionneur de machine (218) ayant un premier actionneur de commande de machine, et
un premier capteur d'automatisation (216) ;
une seconde machine de travail automatisée (106 ; 608 ; 718), comprenant :
une seconde passerelle d'application (210, 230) dotée d'une seconde carte de communication configurée pour communiquer sur le réseau de communication (130, 242) avec la carte de communication du serveur,
une seconde unité de commande de machine (214) comprenant un second processeur et une seconde mémoire, qui stocke des informations de caractéristiques de seconde machine et les opérations de seconde machine,
un second système d'actionneur de machine (218) ayant un second actionneur de commande de machine, et
un second capteur d'automatisation (216) ; et
dans lequel la première machine de travail automatisée (102, 104 ; 606 ; 716) envoie les caractéristiques de première machine par l'intermédiaire de la première carte de communication à la carte de communication du serveur de système de serveur en réseau ;
dans lequel le dispositif de commande de serveur (602) analyse les caractéristiques de première machine pour déterminer les attributs de la première machine de travail automatisée (102, 104 ; 606 ; 716) et crée un premier profil de machine, dans lequel le premier profil de machine est créé par le dispositif de commande de serveur (602) qui convertit les caractéristiques de première machine en un cadre standard pour un système de planification de mission du serveur en réseau ;
dans lequel le système de planification de mission génère un plan de mission pour la pluralité de machines de travail automatisées (102, 104, 106 ; 606, 608 ; 716, 718), qui comportent la première machine de travail automatisée (102, 104 ; 606 ; 716) et la seconde machine de travail automatisée (106 ; 608 ; 718), à l'aide du cadre standard, et dans lequel le plan de mission comporte des instructions d'opération pour la première machine de travail automatisée (102, 104 ; 606 ; 716) et la seconde machine de travail automatisée (106 ; 608 ; 718) ;
dans lequel le dispositif de commande de serveur (602) traduit les instructions de fonctionnement de la première machine de travail automatisée (102, 104 ; 606 ; 716) à partir du cadre standard dans les opérations de la première machine automatisée et traduit les instructions de fonctionnement de la seconde machine de travail automatisée (106 ; 608 ; 718) à partir du cadre standard dans les opérations de seconde machine, dans lequel les opérations de première machine et les opérations de seconde machine ne sont pas des cadres compatibles.

2. Système de gestion (118) selon la revendication 1, dans lequel la première machine de travail automatisée (102, 104 ; 606 ; 716) comprend en outre un système de sécurité contre les obstacles pour maintenir la première machine de travail automatisée (102, 104 ; 606 ; 716) à une distance de sécurité d'un obstacle détecté, dans lequel la première unité de commande de machine (214) gère les opérations de la première machine de travail automatisée (102, 104 ; 606 ; 716) pour maintenir la distance de sécurité par rapport à l'obstacle détecté.

3. Système de gestion (118) selon la revendication 1, dans lequel la première carte de communication est en outre configurée pour communiquer sur un réseau de communication à courte portée (132), qui est différent du réseau de communication (130, 242).

4. Système de gestion (118) selon la revendication 2, dans lequel la première unité de commande de machine (214) commande la première machine de travail automatisée (102, 104 ; 606 ; 716) pour interagir avec la seconde machine de travail automatisée (106 ; 608 ; 718) à l'intérieur de la distance sur la base d'un échange d'informations en temps réel avec la seconde machine de travail automatisée (106 ; 608 ; 718) sur le réseau de communication à courte portée (132).

5. Système de gestion (118) selon la revendication 4, dans lequel le plan de mission ordonne à la première unité de commande de machine (214) d'interagir avec la seconde machine de travail automatisée (106 ; 608 ; 718), et la première unité de commande de machine (214) utilise l'échange d'informations en temps réel pour gérer l'interaction.

6. Système de gestion (118) selon la revendication 3, dans lequel la première carte de communication est en outre configurée pour communiquer sur un réseau de communication à portée intermédiaire, qui est différent du réseau de communication (130, 242) et du réseau de communication à courte portée (132), et dans lequel le réseau de communication à portée intermédiaire fonctionne avec une largeur de bande inférieure à celle du réseau de communication (130, 242) et du réseau de communication à courte portée (132).

7. Système de gestion (118) selon la revendication 1, dans lequel le plan de mission ordonne à la première unité de commande de machine (214) d'interagir avec une pluralité de machines de travail automatisées (102, 104, 106 ; 606, 608 ; 716, 718) à l'aide des informations en temps réel provenant de chacune de la pluralité de machines de travail automatisées (102, 104, 106 ; 606, 608 ; 716, 718).
